**Europäisches Patentamt**

**European Patent Office**

**Office européen des brevets**

(11) Veröffentlichungsnummer: **0 029 827**
**B1**

## (12) EUROPÄISCHE PATENTSCHRIFT

(45) Veröffentlichungstag der Patentschrift:
**14.05.86**

(21) Anmeldenummer: **80900117.5**

(22) Anmeldetag: **11.01.80**

(86) Internationale Anmeldenummer:
**PCT/CH 80/00004**

(87) Internationale Veröffentlichungsnummer:
**WO 80/02764 (11.12.80 Gazette 80/28)**

(51) Int. Cl.⁴: **G 08 B 13/18, G 01 S 17/06**

(54) **VERFAHREN ZUR RAUMÜBERWACHUNG MITTELS GEPULSTER RICHTSTRAHLUNG UND VORRICHTUNG ZUR AUSFÜHRUNG DES VERFAHRENS.**

(30) Priorität: **06.06.79 CH 5257/79**

(43) Veröffentlichungstag der Anmeldung:
**10.06.81 Patentblatt 81/23**

(45) Bekanntmachung des Hinweises auf die Patenterteilung:
**14.05.86 Patentblatt 86/20**

(84) Benannte Vertragsstaaten:
**FR**

(56) Entgegenhaltungen:
**DE - A - 2 403 052**
**GB - A - 2 021 893**
**US - A - 4 124 848**

**Fachlexikon "ABC Physik", Librairie Harry Deutsch, Zürich, pages 1246-1250**

(73) Patentinhaber: **ZELLWEGER USTER AG, Wilstrasse 11, CH-8610 Uster (CH)**

(72) Erfinder: **MEHNERT, Walter, Grillparzerstrasst 6, D-8012 Ottobrunn (DE)**

(74) Vertreter: **Armengaud, Alain, Cabinet ARMENGAUD AINE 3 Avenue Bugeaud, F-75116 Paris (FR)**

## Beschreibung

Die vorliegende Erfindung bezieht sich auf ein Verfahren zur Raumüberwachung mittels gepulster Richtstrahlung nach dem Oberbegriff des Patentanspruchs 1 und eine Vorrichtung zur Ausführung des Verfahrens. Aus dem Stande der Technik sind verschiedene Arten von Lichtschranken bekannt, so beispielsweise beschrieben in der DE-Auslegeschrift 21 57 815 und DE-Auslegeschrift 21 29 666 und DE-Offenlegungsschrift 23 53 702, welche dazu verwendet werden können bestimmte Flächen, Gelände oder Räume bezüglich unerwünschter Eindringung zu überwachen. Solche Systeme gestatten zwar eine Überwachung längs einer Peripherie, jedoch nur über jeweils geradlinige Strecken. Sie haben zudem den Nachteil, dass die hiefür benötigten Geräte an dieser Peripherie selbst angeordnet sein müssen, wodurch sie beispielsweise durch böswillige Eingriffe in ihrer Wirksamkeit beeinträchtigt werden können oder sogar durch ihre genaue Beobachtung überlistet werden können. Es sind auch schon Raumüberwachunssysteme vorgeschlagen worden, bei welchen in einem zu überwachenden Raum ein Strahlungsfeld erzeugt wird, wobei Sensoren auf Feldänderungen, wie sie durch in den Raum eindringende Objekte verursacht werden, ansprechen und in der Folge Alarm auslösen können. Siehe DOS 2 346 764, DOS 2 508 796, DOS 2 600 362, DAS 2 613 375, DOS 2 617 467, DAS 2 638 337, DAS 2 656 256, DOS 2 702 499, 2 722 982.

Bekannte Verfahren und Einrichtungen lösen zwar bestimmte Aufgaben zufriedenstellend, sie weisen aber in der Regel den Nachteil auf, dass sie, wenn sie auf ausreichende Empfindlichkeit eingestellt sind, neben den gewünschten Alarmen auch durch mancherlei andere Effekte zur Abgabe von Fehlalarmen veranlasst werden. Ein solches Verhalten ist aber auf die Dauer sehr unbefriedigend, denn bei häufigen Fehlalarmen wird das Vertrauen in die Zuverlässigkeit eines solchen Verfahrens beziehungsweise einer solchen Einrichtung erschüttert, so dass bald einmal die Alarmierung nicht mehr ernstgenommen wird.

Ein bekanntes Verfahren zur Raumüberwachung ist auch das unter der Bezeichnung RADAR bekannte Verfahren zur Entdeckung und Bestimmung der Position von festen und bewegten Objekten. Wie diese dem «Fachlexikon ABC Physik» (1974), Seiten 1246 bis 1250, entnommene Definition zeigt, handelt es sich beim RADAR um ein Verfahren zur Bestimmung der Lage eines Objektes, nicht aber zu dessen Identifikation. Denn das sogenannte Primärradar kann nur feststellen, dass ein Objekt im Überwachungsraum vorhanden ist, es kann aber nicht zwischen beispielsweise einem zivilen und einem militärischen Flugzeug unterscheiden. Letzteres wird erst mit dem Sekundärradar möglich, bei dem nicht die vom angestrahlten Zielobjekt zurückgestrahlte Energie, sondern die von einem im Zielobjekt befindlichen Sender erzeugte und von ihm ausgestrahlte Energie empfangen und ausgewertet wird. Da eine in einen überwachten Raum eindringende unbefugte Person selbstverständlich keinen derartigen Sender mit sich führen wird, kann man für derartige Zwecke der Raumüberwachung einerseits kein Sekundärradar verwenden und anderseits aber mit einem Primärradar keine ausreichend sichere Objektidentifikation vornehmen.

Der vorliegenden Erfindung liegt daher die Aufgabe zugrunde ein Verfahren zu schaffen, das eine zuverlässige Flächen-, bzw. Gelände-, bzw. Raumüberwachung gewährleistet, das insbesondere gegen böswillige Funktionsbeeinträchtigung weitestgehend immun ist und ausserdem trotz sehr hoher Empfindlichkeit eine äusserst geringe Fehlalarmrate aufweist und sich ausserdem auch für die Überwachung verhältnismässig komplizierter Strukturen von Flächen, Geländen oder Räumen eignet. Weiterhin liegt der Erfindung die Aufgabe zugrunde, eine Vorrichtung zur Ausführung des Verfahrens zu schaffen.

Das Verfahren nach der Erfindung ist gekennzeichnet durch den 1. Patentanspruch. Die Vorrichtung zur Durchführung dieses Verfahrens ist durch den Patentanspruch 35 gekennzeichnet.

Aus dem US Patent 4 124 848 ist eine Überwachungseinrichtung bekannt, bei welcher von einem kontinuierlichen Sender Signale ausgesandt und reflektierte Signale mit den Ausgangssignalen des Senders gemischt und Differenzfrequenzen gebildet werden, welche eine Feststellung der Entfernung des reflektierenden Objekts vom Sender gestatten. Die vom Sender ausgesandten Strahlen spannen dabei eine Ebene auf, deren Durchdringung durch ein Objekt somit festgestellt wird und die als virtueller Zaun bezeichnet ist. Wenn man bedenkt, dass dieser virtuelle Zaun in einer durch den Sender definierten und von diesem ausgehenden Ebene liegt, dann erkennt man, dass dieser virtuelle Zaun einerseits praktisch den bekannten Lichtvorhängen entspricht und somit leicht zu orten und ebenso leicht zu überlisten ist wie diese und anderseits nur an der Peripherie des Überwachungsraums angeordnet sein kann und entsprechend der Form dieser Peripherie in mehreren, die Peripherie einschliessenden Exemplaren vorhanden sein muss. Daher kann dieser bekannte virtuelle Zaun mit der erfindungsgemässen virtuellen Linie oder Fläche, die von dem sie erzeugenden Sender vollständig losgelöst ist und keine irgendwie erkennbare Beziehung zu diesem Sender aufweist, nicht verglichen werden.

Der Erfindung liegt der allgemeine Lösungsgedanke zugrunde, eine zu überwachende Fläche oder ein zu überwachendes Gelände beziehungsweise einen zu überwachenden Raum laufend bezüglich seines Zustandes und bezüglich allfällig auftretender Veränderungen zu vermessen, die Messresultate auszuwerten, beispielsweise mit gespeicherten Werten zu vergleichen. Die Messresultate können auch weiter verarbeitet werden, um dadurch weitere Informationen zu gewinnen und diese weiter gewonnenen Informationen mit gespeicherten Informationen zu vergleichen, um hierdurch einerseits auftretende Veränderungen nicht nur zuverlässig feststellen zu können, son-

dern diese auch hinsichtlich ihrer Lage, ihrer Art und Bedeutung bewerten zu können, beispielsweise um einen allfälligen Alarm nur dann auszulösen, wenn eine festgestellte Veränderung bestimmte Kriterien erfüllt.

Auf diese Weise wird nicht nur eine zuverlässige und exakte Feststellung des Zustandes und von Zustandsänderungen gewährleistet, sondern es gelingt auch die Erfassung auf besondere Objekte, beziehungsweise Ereignisse, zu beschränken. Dadurch können die bei anderen Systemen lästigen häufigen Fehlalarme weitestgehend vermieden werden.

Das Verfahren und die Vorrichtung zu dessen Ausführung erweisen sich als ausserordentlich immun gegenüber böswilliger Beeinträchtigung indem die Systemparameter von aussen praktisch nicht erkennbar sind und nicht durch äussere Massnahmen beeinflusst beziehungsweise überlistet werden können. Ausserdem ist die Vorrichtung selbst im Gegensatz zu den erwähnten Lichtschranken nicht an der Peripherie der zu überwachenden Fläche, beziehungsweise des zu überwachenden Geländes, beziehungsweise des zu überwachenden Raumes angeordnet, sondern praktisch im Zentrum des zu überwachenden Gebietes. Dank der Kleinheit der genannten Vorrichtung und dem verhältnismässig grossen Abstand von der Peripherie ist das Gerät auch leicht zu tarnen und so gegen böswillige Ferneinwirkung zu schützen.

Das Verfahren und die Vorrichtung eignen sich nicht nur für die Überwachung von Flächen, Gelände und Räumen gegen störende, insbesonders böswillige Einwirkung, sondern beispielsweise auch für die laufende Überwachung beispielsweise von Abrutschgebieten, wichtigen Bauwerken wie Staumauern hinsichtlich auftretender Veränderungen. Auch für die Einbruchsicherung von Liegenschaften eignet sie sich dank des verhältnismässig geringen Aufwandes und der grossen Flexibilität bezüglich ihrer Anwendung auf unterschiedliche Strukturen. Durch das hohe Auflösungsvermögen und die rasche Arbeitsweise ist auch die Erfassung bewegter Objekte und deren Verhalten zuverlässig und mit hoher Genauigkeit möglich.

Im folgenden wird die Erfindung anhand der Zeichnung beispielsweise erläutert. Dabei zeigt:

Fig. 1 einen Grundriss einer zu schützenden Fläche beziehungsweise eines Geländes mit einer möglichen Anordnung von Warnzonen ausserhalb einer Schutzzone mittels virtueller Linien;

Fig. 2 eine perspektivische Darstellung der Verhältnisse bei einer Raumüberwachung mit virtuellen Flächen zur Bildung von Warnräumen und einem Schutzraum;

Fig. 3 ein Beispiel einer Vermessung eines bewegten Objektes in einem Gelände;

Fig. 4 ein Aufriss zur Darstellung der Richtstrahlung und virtueller Flächen;

Fig. 5 eine Schnittzeichnung eines Richtstrahlers;

Fig. 6 ein Blockschaltbild einer Vorrichtung zur Ausführung des Verfahrens;

Fig. 7 einen schematischen Aufriss des Messstrahlenverlaufes bei der Festlegung bestimmter virtueller Flächen;

Fig. 8 einen schematischen Grundriss des Verlaufes von Messstrahlen bei der Festlegung bestimmter virtueller Flächen;

Fig. 9 und 9a eine Anordnung mit einem Strahlaufteilungssystem;

Fig. 10 im Blockschaltbild für ein Ausführungsbeispiel mit einem Strahlaufteilungssystem;

Fig. 11 schematisch die serielle Auswertung von Entfernungsvektoren;

Fig. 12 schematisch die gruppenweise Auswertung von Entfernungsvektoren.

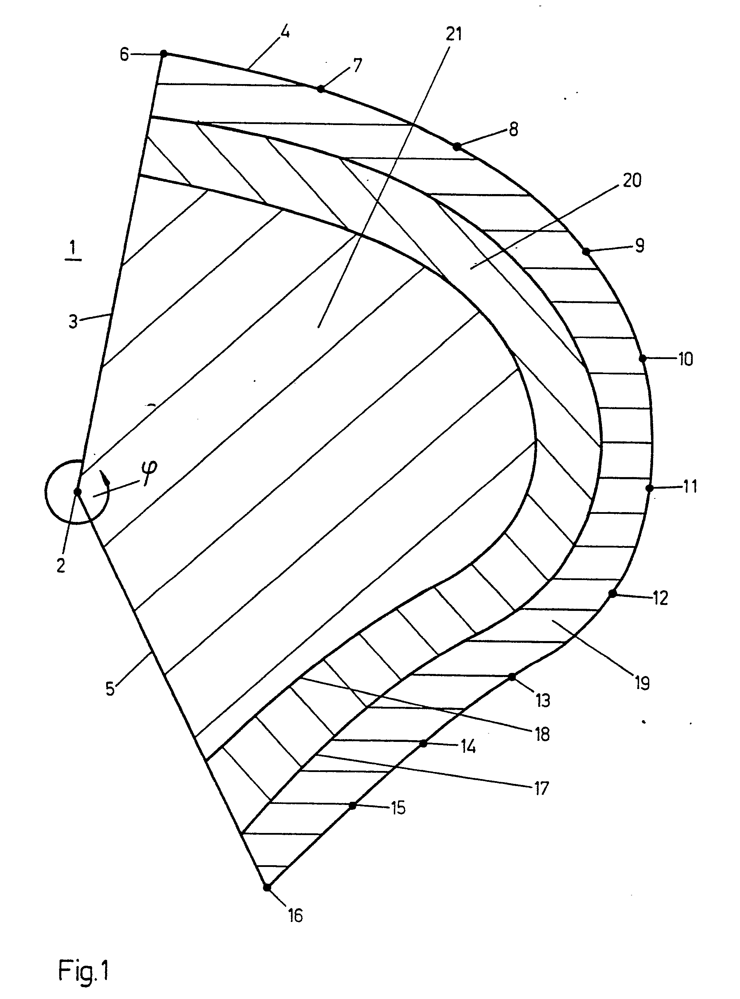

In Fig. 1 ist ein Gelände oder eine Fläche 1 durch die von einem Punkte 2 ausgehende Linie 3, durch eine Linie 4 und eine zum Punkte 2 zurückführende Linie 5 begrenzt.

Die Fig. 1 zeigt das Gelände 1 im Grundriss. Die Linie 4 zwischen den Linien 3 und 5 ist dabei als eine virtuelle Linie zu verstehen, welche zwar im Gelände selbst physisch nicht in Erscheinung tritt, jedoch in ihrem Verlaufe durch in einem Speicher gespeicherte Daten, beispielsweise durch die auf den Punkt 2 bezogenen Polarkoordinaten einer Anzahl auf ihr liegender ausgewählter Punkte, beispielsweise der Punkte 6 bis 16, festgelegt ist. Zwischen diesen ausgewählten Punkten kann der Verlauf der virtuellen Linie 4 beispielsweise durch Interpolation mittels eines Rechners linear oder nach einer vorgegebenen Funktion festgelegt werden.

Eine zweite virtuelle Linie 17 kann frei gewählt werden, beispielsweise in einem frei wählbaren, vorzugsweise konstanten Abstand von der ersten virtuellen Linie 4 in Richtung zum Punkt 2 hin.

Eine dritte virtuelle Linie 18 kann ebenfalls frei gewählt werden, beispielsweise in einem weiteren frei wählbaren, vorzugsweise konstanten Abstand von der zweiten virtuellen Linie 17 in Richtung zum Punkt 2 hin. Durch diese virtuellen Linien 4, 17 und 18 wird nun die Fläche des Geländes 1 in Teilflächen 19, 20 und 21 aufgespalten, denen je eine bestimmte Bedeutung zugeordnet werden kann. So stellt beispielsweise 19 eine erste Warnzone, die Teilfläche 20 eine zweite Warnzone und die Teilfläche 21 eine Schutzzone dar. Jeder der genannten Teilflächen wird somit je eine bestimmte Bedeutung zugeordnet.

Der Punkt 2 stellt den Standort für einen Richtstrahler dar, welcher beispielsweise eng gebündelte elektromagnetische Strahlung, beispielsweise unsichtbare Lichtimpulse einer Laserlichtquelle in zeitlicher Folge in unterschiedliche Richtungen nach dem Gelände 1 ausstrahlt. Jeder dieser Impulse wird zu einem definierten Zeitpunkt und in einem jeweils definierten Azimutwinkel $\varphi$ und Elevationswinkel $\psi$ in das Gelände 1 abgestrahlt.

Der Punkt 2 ist auch der Standort für einen Strahlungsempfänger, welcher aus der jeweiligen Richtung eines Strahlungspulses, vorzugsweise räumlich und frequenzmässig selektiv auf einfallende, d.h. reflektierte Strahlung anspricht und diese auswertet. Durch jeden solchen Strahlungspuls wird jeweils ein bestimmter Messstrahl gebildet, welcher gegebenenfalls an einem Objekt oder vom Gelände als Hintergrund reflektiert wird. Wir bezeichnen einen solchen mit einer Reflexion verbundenen Messstrahl im weiteren stets als einen direkten Messstrahl. Tritt hingegen keine Reflexion auf, beispielsweise wegen vollkommener oder praktisch nahezu vollkommener Absorption oder wegen Wegspiegelung der ausgesandten Strahlung in eine andere Richtung, so bezeichnen wir einen solchen Messstrahl im weiteren als einen indirekten Messstrahl. Wie weiter noch gezeigt werden wird, kann nämlich auch im Falle indirekter Messstrahlen, d.h. ausbleibender Reflexion, signifikante Information bezüglich des Zustandes im überwachten Gelände gewonnen werden.

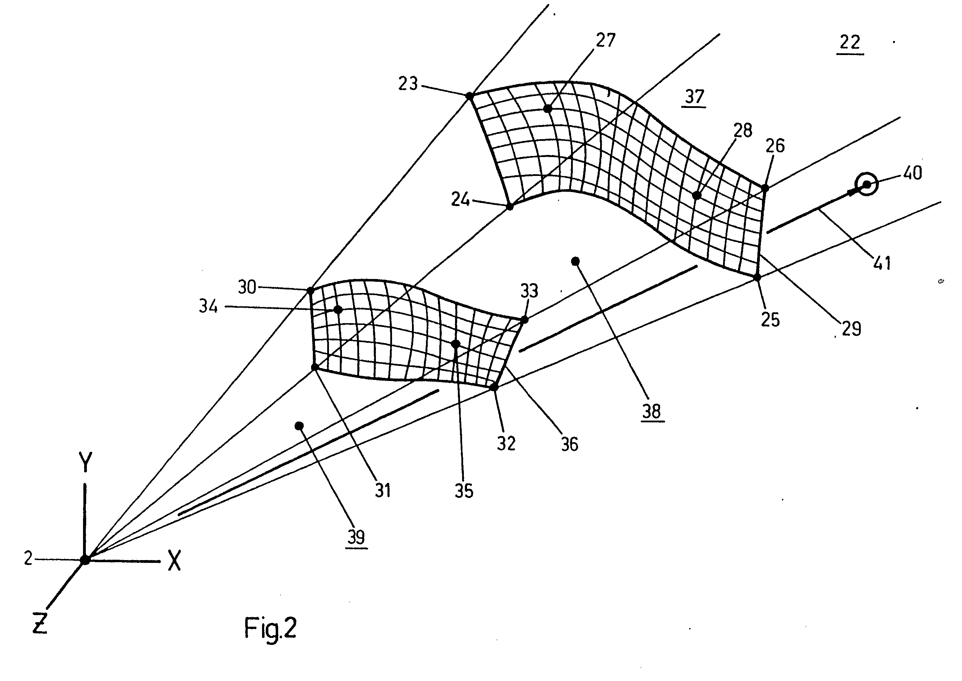

Anhand der Fig. 2 werden nun die Verhältnisse bei der Festlegung von bestimmten Punkten im Raum zur Definition von virtuellen Flächen im Raum beschrieben. Der Punkt 2 im Raum wird als Standort des Richtstrahlers gewählt. Ein Raumsektor 22 erstreckt sich ausgehend vom Punkt 2. Seine winkelmässige Begrenzung erfolgt durch Festlegung bestimmter Punkte im Raum, beispielsweise durch die Punkte 23, 24, 25 und 26. Durch diese Punkte 23 bis 26 und allenfalls weitere Punkte, beispielsweise 27, 28 und weitere, kann eine beliebig verlaufende Fläche als virtuelle Fläche 29 im Raum 22 definiert werden. Der räumliche Verlauf der virtuellen Fläche 29 kann zwischen den genannten definierten Punkten durch Interpolation aufgrund eines vorgegebenen funktionellen Zusammenhanges festgelegt sein. In entsprechender Weise können weitere virtuelle Flächen definiert werden, beispielsweise durch die Festlegung der weiteren Punkte 30, 31, 32, 33, 34 und 35 und allenfalls zusätzliche Punkte, eine zweite virtuelle Fläche 36.

Die virtuellen Flächen 29 und 36 sind in Fig. 2 je durch ein Liniennetz dargestellt.

Die Festlegung der genannten Punkte kann beispielsweise durch die auf das Koordinatensystem x, y, z bezogenen Koordinaten jedoch solchen Punktes erfolgen oder durch Polarkoordinaten, wobei diese Koordinaten in einem Speicher gespeichert sind. Die genannten virtuellen Flächen 29 und 36 treten daher im Raum physisch nicht in Erscheinung, es handelt sich vielmehr um «gedachte» Flächen, durch welche der Raumsektor 2 in Teilräume aufgespalten wird.

Jedem dieser Teilräume wird nun eine bestimmte Bedeutung zugeordnet, beispielsweise wird der äusserste Teilraum 37 als Vorwarnraum, der mittlere Teilraum 38 als Warnraum und der innerste Teilraum 39 als Schutzraum bestimmt. Durch eine zeitlich und bezüglich Azimut und Elevation definierte Folge von Messstrahlen, welche vom Standort Punkt 2 des Richtstrahlers ausgehen, wird nun der Raumsektor 22 abgetastet beziehungsweise vermessen, wobei ein sich im Raumsektor 22 befindliches Objekt 40, oder bei einem grösseren Objekt ein Teil desselben, einmal oder wiederholt von Messstrahlen einer bestimmten Richtung getroffen wird. Ein solcher Messstrahl ist ein enges Strahlungsbündel, dessen Querschnitt beim Objekt, beziehungsweise bei den virtuellen Flächen, als punktförmig bezeichnet wird. Dabei ist unter punktförmig zu verstehen, dass der Querschnitt klein ist im Verhältnis zu den Abmessungen festzustellender Objekte. Das heisst gleichzeitig, dass der kleinstmögliche Querschnitt auch dann als punktförmig angesehen wird, wenn das festzustellende Objekt noch kleiner ist. In diesem Fall kann jedoch nichts mehr über die tatsächliche Grösse des Objekts ausgesagt werden, obwohl das Objekt noch erkennbar bleibt.

Empfangsseitig wird durch Messung der Laufzeit der Strahlung zwischen Richtstrahler und Objekt 40, beziehungsweise zurück zum Empfänger, mindestens ein Parameter, z.B. die Distanz vom Richtstrahler, beziehungsweise der Ort des Objektes, ermittelt. Aufgrund der zeitlichen Folge der Messtrahlen und ihrer Azimut- und Elevationswinkel und damit der verschiedenen Messwerte kann ein Objekt 40 (Fig. 2) und/oder seine Form direkt erfasst werden. Befindet sich ein Objekt mit die Strahlung praktisch vollkommen absorbierender Oberfläche im überwachten Raum, so kann durch das plötzliche Ausbleiben von Reflexionen des Hintergrundes auf indirekte Weise trotzdem die Anwesenheit, die winkelmässige Lage, die Form und weitere Information bezüglich eines solchen Objektes durch Verarbeitung der direkten Messtrahlen aus der unmittelbaren Umgebung dieses Objektes gewonnen werden. Die gleichen Überlegungen gelten sinngemäss auch für den Fall der Überwachung eines Geländes nach Figur 1.

Da die genannten virtuellen Linien 4, 17 und 18 (Fig. 1) beziehungsweise die genannten virtuellen Flächen 29 und 36 (Fig. 2) durch Speicherung zugeordneter Koordinaten oder durch Interpolationsrechnungen aufgrund funktioneller Zusammenhänge definiert sind, können sie entweder starr im Gelände, beziehungsweise im Raum, definiert sein – die Koordinaten sind dann konstante, auf den Standort Punkt 2 des Richtstrahlers bezogene Werte, oder sie können auch durch die Eingabe entsprechender zeitlich variabler Werte in den Speicher auch im Laufe der Zeit veränderliche Lage aufweisen.

Der Standort Punkt 2 des Richtstrahlers kann selbst zeitlich veränderlich sein, d.h. der Richtstrahler ist bezüglich seiner Koordinaten beweglich, wobei auch in diesem Falle die auf den nun beweglichen Punkt 2 bezogenen Koordinaten der virtuellen Linien beziehungsweise der virtuellen Flächen konstant oder aber zeitlich veränderlich sein können.

Solche zeitlichen Veränderungen der virtuellen Linien und virtuellen Flächen erschweren in ausserordentlicher Weise eine allenfalls beabsichtigte Überlistung des Überwachungssystems, indem nämlich von aussen weder die Lage der virtuellen Linien und Flächen noch ihre Veränderungen erkannt beziehungsweise vorausgesagt werden können. Selbst durch vorgängige Erfahrung allenfalls gewonnene Erkenntnisse bezüglich der damaligen Lage virtueller Linien oder Flächen sind wertlos für eine geplante Überlistung der Raumüberwachung, wenn, wie vorstehend erwähnt, die Ortsparameter der virtuellen Linien und/oder Flächen zeitlich veränderlich gewählt werden.

Bewegt sich ein von Messstrahlen erfasstes Objekt, so können durch rechnerische Verarbeitung der Messwerte, das heisst Laufzeiten, wie sie durch die Entfernungsvektoren der Messstrahlen dargestellt werden, nicht nur Informationen über Grösse und Form, beziehungsweise Gestalt und Lage, sondern auch Bewegungskriterien des Objektes erfasst werden. Solche Bewegungskriterien betreffen den Weg des Objektes, die Geschwindigkeit und die Beschleunigung.

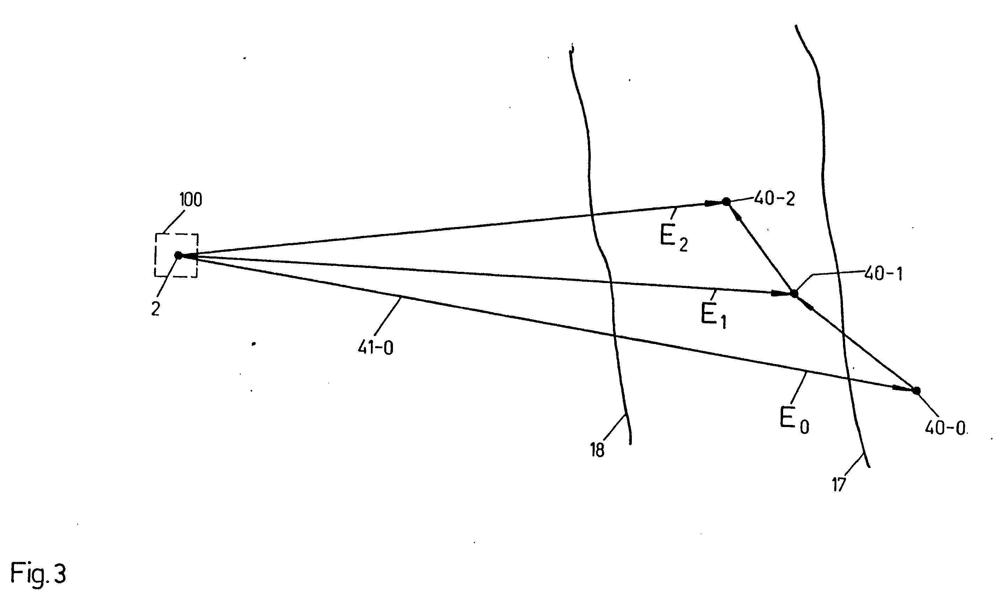

Die Fig. 3 zeigt ein Ausführungsbeispiel für die Vermessung eines sich bewegenden Objektes 40 mittels aufeinanderfolgender Messstrahlen 41. Zur Zeit $t = t_o$ wird das Objekt 40 in seiner Position 40–0 erstmals von einem Messstrahl 41–0 getroffen. Aus der aufgrund der Laufzeit der Strahlungsenergie vom Richtstrahler zum Objekt 40 und zurück zum Empfänger errechneten momentanen Entfernung des Objektes 40 vom Standort 2 eines Richtstrahlers 100 einerseits und den aufgrund des Aufbaues und der Arbeitsweise des Richtstrahlers für jeden Zeitpunkt, insbesondere auch für jeden einzelnen der sich folgenden Messstrahlen angebbaren Azimutwinkel $\varphi$ und Elevationswinkel $\psi$ sind die Koordinaten der jeweiligen Position des von einem Messstrahl getroffenen Objektes errechenbar.

Ein Vektor $E_0$ gibt somit die Position 40–0 an, in welcher sich das objekt 40 zum Zeitpunkt $t_o$ befindet.

In gleicher Weise gibt ein Vektor $E_1$ durch seine Länge und seinen Azimut- und Elevationswinkel die Position 40–1 des Objektes 40 zum Zeitpunkt $t_1$ an.

Weiter gibt ein Vektor $E_2$ durch seine Länge und seinen Azimut- und Elevationswinkel die Position 40–2 des Objektes 40 zum Zeitpunkt $t_2$ an.

Die genannten Vektoren $E_o$, $E_1$, $E_2$ sind somit eine Funktion der Zeit und der Winkel $\varphi$ und $\psi$.

Aufgrund der ein bestimmtes Objekt verfolgenden Messstrahlen beziehungsweise Vektoren, beziehungsweise der verschiedenen Positionen 40–0, 40–1 und 40–2 lässt sich somit rechnerisch sowohl die Bewegung, d.h. Bahnkurve und/oder die Geschwindigkeit und/oder die Beschleunigung als Bewegungskriterien des Objektes 40 erhalten. Die erforderlichen Rechnungen lassen sich in bekannter Weise durch einen elektronischen Rechner laufend ausführen.

Aufgrund gespeicherter Daten ist aber auch der Verlauf virtueller Linien, beispielsweise 17 und 18 (vergl. Fig. 1) definiert und dem Rechner eingebbar. Es ist ersichtlich, dass bei geeigneter Programmierung des elektronischen Rechners das Überschreiten solcher virtuellen Linien 17, 18 durch ein Objekt 40 als Schnittpunkt der Bahnkurve des Objektes 40 mit der virtuellen Linie 17 oder 18 zeitlich und örtlich errechenbar und angebbar ist.

In analoger Weise kann auch im Falle einer räumlichen Anordnung gemäss Fig. 2 das Durchdringen virtueller Flächen 29 und 36, die Grenzen von Warn- beziehungsweise Schutzräumen darstellen, somit durch rechnerische Auswertung einer Folge von definierten Messstrahlen auch das Eindringen eines oder auch mehrerer Objekte in diese Zonen, beziehungsweise Räume festgestellt werden. Auch der allfällige Aufenthalt von vermessenen Objekten in diesen Zonen, beziehungsweise Räumen, ist durch die rechnerische Auswertung der betreffenden Messstrahlen feststellbar.

Während bisher angenommen war, dass das zu vermessende Objekt im Verhältnis der Brennflecken, d.h. des jeweiligen Querschnittes eines zu einem Messstrahl gehörenden Strahlenbündels klein sei, d.h. dass es, falls es ruhen würde, nicht von zwei oder mehr aufeinanderfolgender Messstrahlen getroffen würde, so wird nunmehr angenommen, dass es sich beim zu vermessenden Objekt 40 um ein solches grösserer Abmessungen handelt, dass es also von einer Vielzahl von Messstrahlen, deren Richtungen jeweils bekannt sind, getroffen wird.

Durch rechnerische Auswertung dieser Vielzahl von Messstrahlen, beziehungsweise der sich zum betreffenden Objekt 40 ergebenden Vektoren, lassen sich bei entsprechender Programmierung des Rechners nicht nur Kriterien bezüglich Grösse, Form, Gestalt, sondern auch bezüglich des Bewegungsverhaltens, wie Richtung, Geschwindigkeit, Beschleunigung, Periodizität usw. erarbeiten. Durch den Vergleich solcher Kriterien mit gespeicherter Information bezüglich Grösse, Form, Gestalt, Bewegungsverhalten, wie Richtung, Geschwindigkeit, Beschleunigung, Periodizität usw. von bekannten Objekten lassen sich, bei wenigstens annähernder Übereinstimmung derselben, vermessene Objekte erkennen, beziehungsweise identifizieren und zum Beispiel einer bestimmten Objektkategorie zuteilen.

Generell ermöglicht das Verfahren die Feststellung aller Objekte die eine virtuelle Linie überschreiten oder virtuelle Fläche durchdringen, beziehungsweise sich in einer der in Patentanspruch 1 genannten Teilflächen oder in einem der dort genannten Teilräume befinden.

Die Unterscheidung zwischen unerwünschten, oder störenden Objekten und geduldeten Objekten ist eine Angelegenheit der örtlichen Auflösung des Systems, d.h. Verfahrens und Vorrichtung bezüglich dieser Objekte sowie dem Grad des Programmes des Rechners. Theoretisch ist eine hundertprozentige Unterscheidung gegeben.

Es ist sodann auch möglich, nach diesem Verfahren und mit der später noch beschriebenen Vorrichtung durch dem Rechner eingegebene Zustandsparameter einen überwachten Fläche oder eines überwachten Raumes eine solche Fläche oder einen solchen Raum sowohl auf Gleichbleiben als auch auf Veränderung zu überwachen. Dabei ist es auch möglich, festgestellte Veränderungen nach bestimmten Gesichtspunkten durch entsprechende Programmierung des Rechners zu bewerten und anzuzeigen und allenfalls Alarm auszulösen.

Es sei darauf hingewiesen, dass die Ermittlung der genannten Vektoren und die verschiedenen genannten Auswertungen und die Vergleiche von Kriterien mit gespeicherten Informationen rechnerische Vorgänge darstellen, welche durch entsprechende Programmierung an sich bekannter Rechner bewältigt werden können, wobei diese Programmierung selbst dem Patentschutz nicht zugeführt werden kann und daher hier nicht näher erläutert wird.

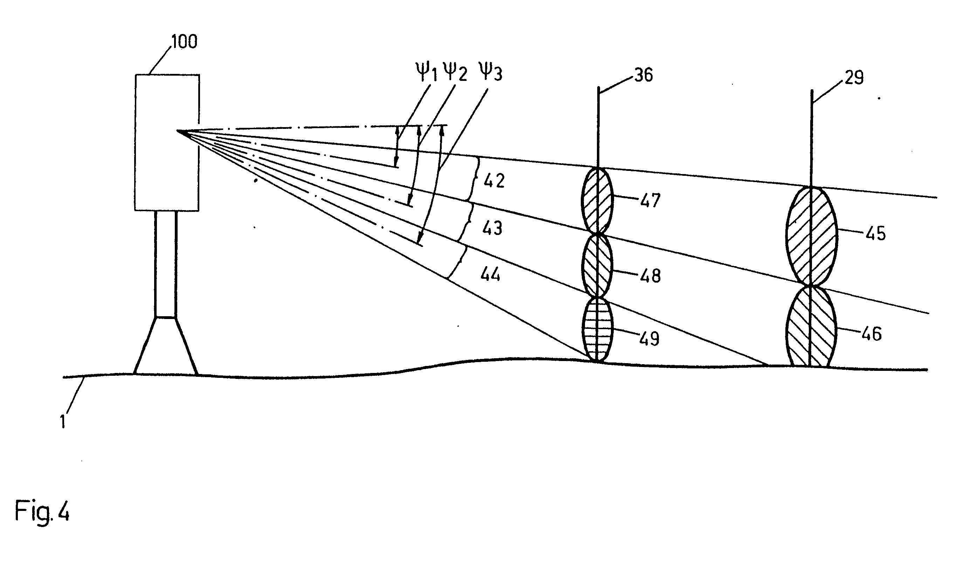

Die Fig. 4 zeigt eine Seitenansicht in schematischer Darstellung zur Kenntlichmachung der Höhe von virtuellen Flächen mit sichtbar dargestellten Brennflecken.

Der Richtstrahler 100 sendet Strahlungsimpulse in definierter zeitlicher Folge in wechselnde Richtungen aus. In der Seitenansicht Fig. 3 erkennt man das Gelände 1 und Strahlenbündel 42, 43 und 44, deren jeweiliger Hauptstrahl einen Elevationswinkel $\psi_1$, beziehungsweise $\psi_2$, beziehungsweise $\psi_3$ aufweist.

Die erste virtuelle Fläche 29 wird in diesem Beispiel als eine senkrecht verlaufende Fläche angenommen. Eine zweite virtuelle Fläche 36 ist ebenfalls als eine senkrecht verlaufende Fläche, jedoch mit kleinerem Abstand vom Richtstrahler 100, angenommen. Auf den virtuellen Flächen werden durch die Strahlenbündel 42, 43 beziehungsweise 44 Brennflecken, 45, 46 beziehungsweise 47, 48, 49 definiert, in Fig. 4 schematisch durch schraffierte Ellipsen angedeutet, deren Abmessungen von der Divergenz jedes Strahlenbündels und vom Abstand vom Richtstrahler abhängt. Durch eine steuerbare Vario-Optik im Falle eines mit Lichtimpulsen arbeitenden Richtstrahlers 100 lässt sich die Grösse der Brennflecken nach einem dem Rechner eingegebenen Programm steuern, beispielsweise in Abhängigkeit von $\varphi$ und/oder $\psi$.

Die Grösse der Brennflecken bestimmt unter anderem auch das Auflösungsvermögen. Um eine ausreichende Überwachungssicherheit zu erzielen ist es daher vorteilhaft, die Divergenz der Strahlenbündel, die Elevationswinkel $\psi$ und die Azimutwinkel $\varphi$ der einzelnen Messstrahlen und ihre zeitliche Folge so zu wählen, dass nur vernachlässigbare örtliche und zeitliche Lücken zwischen den Brennflecken entstehen.

Das Verfahren lässt sich sowohl mit einem einzigen Richtstrahler, dessen Strahlungsrichtung veränderlich ist, durchführen als auch mit einer Mehrzahl nach unterschiedlichen Richtungen strahlender Richtstrahler. Die unterschiedlichen Strahlungsrichtungen können beispielsweise entweder durch bewegliche Anordnung des Senders selbst oder durch dem Sender zugeordnete bewegliche Strahlablenkungselemente erfolgen.

Es ist aber auch möglich, einen Richtstrahler dadurch zu verwirklichen, dass mindestens einem Sender ein Strahlaufteilungssystem zur flächenmässigen und/oder raummässigen Aufspaltung oder Auffächerung der Strahlung nachgeordnet ist. Bei einem solchen System wird dann beispielsweise gepulste elektromagnetische Strahlung, insbesondere Lichtstrahlung, zum Beispiel Infrarot-Strahlung, nach verschiedenen definierten Richtungen ausgesandt und die an Objekten oder Hintergrund reflektierte Strahlung jeweils durch ein oder mehrere analoge Strahlauffächerungssysteme mindestens einem Empfänger zugeleitet und ausgewertet. Die reflektierte Strahlung wird also vorzugsweise räumlich selektiv empfangen.

Erfolgt die Aussendung nach unterschiedlichen Richtungen zeitlich nacheinander, so werden die entsprechenden reflektierten Strahlungsanteile vorzugsweise ebenfalls nacheinander empfangen und einzeln ausgewertet. Es ergibt sich dann ein Sendekanal für die Aussendung der Strahlung und ein Empfangskanal für die räumlich selektive Aufnahme der reflektierten Strahlung und ihre Weiterleitung zum Empfänger, welcher Kanäle vorzugsweise gegeneinander entkoppelt sind, um den Übertritt ausgesandter Strahlung vom Sendekanal direkt in den Empfangskanal zu vermeiden. Dies ist im Hinblick auf den grossen Signalpegelunterschied in beiden Kanälen anzustreben, um den Empfänger gegen Übersteuerung zu schützen.

Für besondere Zwecke, beispielsweise Überwachung mehrerer diskreter Flächen unter Verwendung nur eines Senders und Empfängers, ist es vorteilhaft Strahlungsimpulse nach einem bestimmten Programm gruppenweise nach unterschiedlichen Richtungen auszusenden und Reflexionen jeweils aus den genannten Richtungen gruppenweise zu empfangen und auch gruppenweise auszuwerten.

Werden Strahlungsimpulse gruppenweise nach verschiedenen Richtungen ausgesandt und gruppenweise aus diesen Richtungen empfangen, so ist es nicht notwendig, jedes Signal aus jeweils jeder Richtung einzeln auszuwerten. Tritt nämlich im Strahlauffächerungsbereich beispielsweise durch ein eindringendes Objekt eine Veränderung der Reflexionsverhältnisse ein, d.h. Reflexion mindestens eines der aufgefächerten Strahlen an einem anderen Ort als zuvor, so tritt auch bei gemeinsamer Auswertung einer ganzen Gruppe von Signalen im so erhaltenen Summensignal eine Veränderung auf. Eine solche Veränderung des Summensignals gegenüber dem ungestörten Zustand kann als ein Kriterium für eine Alarmauslösung verwendet werden.

Wendet man mindestens zwei Strahlaufteilungssysteme je mit flächenmässiger Auffächerung der Strahlung in unterschiedliche Flächen, also räumlich gestaffelt, an, so wird ein mindestens zwei Flächen durchstossendes Objekt Änderungen der Empfangssignale zeitlich gestaffelt verursachen, wobei durch Auswertung des zeitlichen Unterschiedes und der Reihenfolge der Veränderung des Ausgangssignals in den mindestens zwei Systemen die Bewegungsrichtung eines eindringenden Objektes ermittelt und dies als ein weiteres Kriterium zur richtungsabhängigen Alarmauslösung verwendet werden kann.

Das Verfahren ist grundsätzlich für jede als Impulse abstrahlbare Energie anwendbar, beispielsweise Ultraschallenergie, insbesondere aber auch für elektromagnetische Energie. Vorzugsweise eignet sich impulsförmige Laserstrahlung und insbesondere im Bereich unsichtbaren Lichtes, beispielsweise im Infrarotbereich.

In einem gegebenen Anwendungsfall kann es sich beispielsweise zur möglichst lückenlosen Bedeckung einer virtuellen Fläche mit Brennflecken als vorteilhaft erweisen, die Bündelung der Strahlung in Abhängigkeit von der jeweiligen Richtung zu steuern.

Namentlich im Hinblick auf die Beherrschung der Dynamik des Empfangssystems, d.h. der einwandfreien Verarbeitung sowohl sehr schwacher als auch sehr starker Signale kann es sich in einem gegebenen Fall auch als zweckmässig erweisen, die Sendeleistung und/oder die Empfangsempfindlichkeit in Abhängigkeit von der Strahlungsrichtung zu steuern.

Es ist aber auch möglich zu diesem Zwecke die Sendeleistung und/oder die Empfangsempfindlichkeit in Abhängigkeit von der Grösse von Messstrahlen, beziehungsweise Entfernungsvektoren, und/oder der Intensität der Reflexion zu steuern.

Das Verfahren lässt sich auch so weiter ausbilden, dass nicht nur die Entfernungsvektoren selbst, sondern auch die Intensität der zum Empfänger reflektierten Strahlung ausgewertet wird. Beispielsweise können auf diese Weise bestimmte Objekte aufgrund ihres gegenüber anderen Objekten und/oder gegenüber dem Hintergrund höheren Reflexionsvermögens erkannt werden. Ihre zugehörigen, aus ihren Entfernungsvektoren gewonnenen Messdaten können, basierend auf der zusätzlichen Auswertung der höheren Intensität der dem Empfänger zugeführten reflektierten Strahlung besonders behandelt, beziehungsweise ausgewertet werden. Dabei lässt sich auch eine namhafte Datenreduktion erzielen, wenn dem Rechner und dem Speicher nur eine solche Auswahl von Daten zugeführt wird, welche zufolge der höheren Intensität der Reflexion, mindestens zeitweise, besonders interessant sind.

Die Auswertung von Empfangsvektoren beschränkt sich so beispielsweise bezüglich Ort der Reflexion und/oder Bewegungsverhalten des betreffenden Objektes nur auf eine gewünschte Auswahl von Objekten.

Diese Auswahl kann beispielsweise durch die Anordnung einer an sich bekannten Schwellwert-Einrichtung im Empfangskanal und/oder durch gezielte, mindestens zeitweise, Verminderung der Sendeleistung des Richtstrahlers und/oder der Empfangsempfindlichkeit gegenüber dem Normalbetrieb erfolgen.

Es ist auch möglich, für die Erfassung bestimmter Punkte im Gelände oder Raum, beispielsweise ausgewählte Punkte festzulegender virtueller Linien und/oder festzulegender Flächen, an den betreffenden Stellen im Gelände oder Raum besonders stark reflektierende Objekte, beispielsweise sogenannte Retroreflektoren, zweitweise anzuordnen, diese wie erwähnt zu vermessen und aufgrund der erhöhten Reflektivität die zugehörigen Entfernungsvektoren auszuwählen sowie die dabei ermittelten Koordinaten der Standorte dieser besonders stark reflektierenden Objekte zur Festlegung virtueller Linien und/oder Flächen zu speichern.

Es ist aber auch möglich, das Verfahren im Zusammenhang mit der Verkehrsüberwachung anzuwenden. Beispielsweise kann eine virtuelle Linie oder virtuelle Fläche quer zu einer Fahrbahn festgelegt werden und die Überschreitung beziehungsweise Durchdringung dieser virtuellen Linie beziehungsweise virtuellen Fläche festgestellt, ausgewertet und beispielsweise gezählt oder registriert werden.

Das Verfahren lässt sich für vielseitige Aufgaben der Verkehrsüberwachung einsetzen, so für die Verkehrszählung, Verkehrsbewertung beispielsweise Staubildung auf Autobahnen, Steuerung von Verkehrsregelanlagen, Steuerung von Parkhausanlagen, zur Überwachung von Fahrzeugen, deren Lenker ein Verkehrssignal, zum Beispiel ein Rotlicht, missachtet haben.

Ganz allgemein kann auch gesagt werden, dass das Verfahren zur Überwachung einer Fläche oder eines Raumes sowohl auf gleichbleibenden als auch auf sich verändernden Zustand geeignet ist, wobei sowohl die Tatsache des Gleichbleibens des Zustandes als auch allfällige Veränderungen bewertet und/oder angezeigt werden können. Es kann also beispielsweise als Objekt ein abrutschgefährdeter Abhang, ein Bauwerk, zum Beispiel eine Staumauer oder ein Staudamm, eine Brücke usw. dauernd oder zeitweise auf den Zustand überwacht werden. Stellen sich unzulässige Veränderungen ein, so können diese erfasst, registriert oder durch Alarm gemeldet werden.

Zur Lösung dieser speziellen Aufgaben ist es vorteilhaft, mindestens eine virtuelle Linie oder virtuelle Fläche mindestens annähernd auf der Oberfläche des überwachten Objektes, zum Beispiel Bauwerkes liegend festzulegen. Veränderungen wirken sich dann beispielsweise so aus, dass mindestens Teile der Oberfläche des überwachten Objektes oder Bauwerkes in eine andere Teilfläche oder einen anderen Teilraum eindringen. Dies wird durch ein entsprechendes Ausgangssignal des Rechners angezeigt, so dass gegebenenfalls Alarm ausgelöst werden kann.

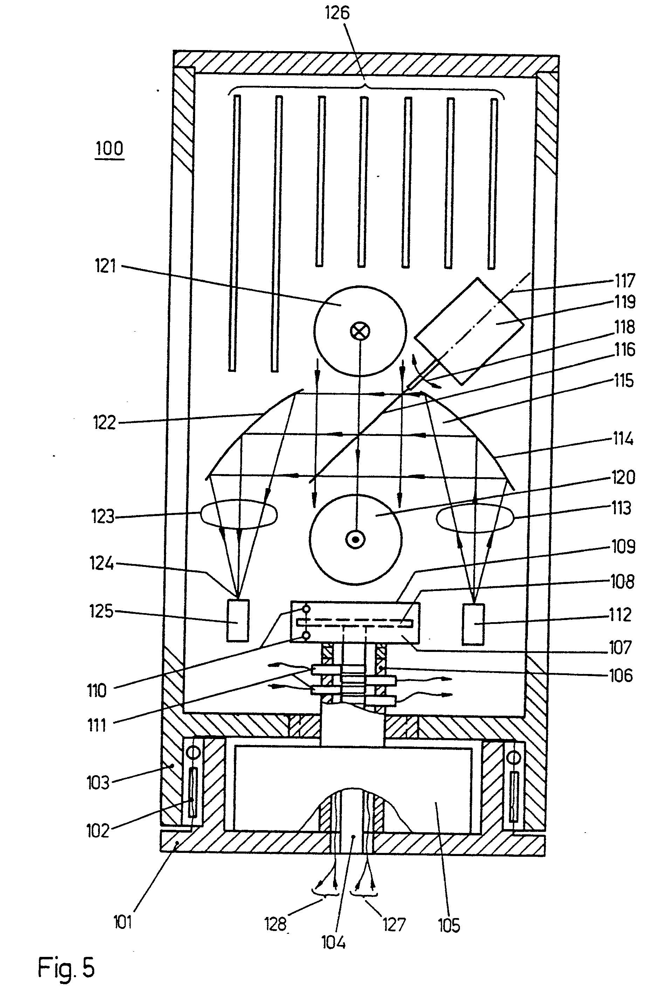

Die Fig. 5 zeigt ein erstes Ausführungsbeispiel eines Richtstrahlers in einer Schnittzeichnung.

In Fig. 5 bezeichnet 100 den Richtstrahler als Ganzes, das heisst, er umfasst nicht nur den Sendeteil sondern auch den Empfangsteil samt den zugeordneten Hilfseinrichtungen.

Der Richtstrahler 100 weist einen Unterteil 101 auf, welcher am Standort 2 (Fig. 1, Fig. 2, Fig. 3) befestigt ist. Auf dem Unterteil 100 ist über ein Nadelkugellager 102 ein Oberteil 103 um eine feststehende Achse 104 drehbar gelagert.

Eine im Unterteil 101 angeordnete Antriebseinrichtung 105 treibt über eine Hohlwelle 106 und eine in Fig. 5 nicht bezeichnete Kupplung den Oberteil 103 an, wobei sich dieser mit beispielsweise zwölf Umdrehungen pro Sekunde um die Achse 104 dreht.

Ein Drehgeber 107 weist einerseits eine mit dem Unterteil 101 über die Achse 104 starr verbundene Drehgeberscheibe 108 auf, welche also bezogen auf den Unterteil 101 still steht und anderseits in Fig. 5 nur angedeutete, mit dem Gehäuse 109 des Drehgebers 107 verbundene Sensoren 110 auf. Da das Gehäuse 109 des Drehgebers 107 mit dem Oberteil 103 des Richtstrahlers 100 starr verbunden ist, rotiert es zusammen mit den Sensoren 110 um die Achse 104, bewegt sich also relativ zum Unterteil 101 und der damit starr verbundenen Drehgeberscheibe 108.

Mittels des Drehgebers 107 und seinen Sensoren 110 ist somit jederzeit die momentane relative Drehlage des Oberteils 103 als Messwert aus den Sensoren 110 über an Schleifringe 111 angeschlossene Leitungen einem Rechner zuführbar.

Im drehbaren Oberteil 103 sind nun weitere für den Richtstrahler 100 benötigte Bauteile eingebaut. Ein Impulssender 112, beispielsweise ein Laser-Dioden-Sender für die Abgabe gepulster Infrarotstrahlung, letztere in Fig. 5 dargestellt durch ein divergentes Sendelichtbündel 113, sendet dieses über ein erstes optisches Mittel 114, beispielsweise über einen Parabolspiegel 114, als zylindrisches, im wesentlichen kreisförmigen Querschnitt aufweisendes horizontales bis auf die Abbildungsstrahlen parallelstrahliges Strahlenbündel 115 gegen ein bewegliches Strahlablenkorgan 116, beispielsweise gegen die untere Seite eines beidseitig verspiegelten Schwingspiegels 116.

Das Strahlablenkorgan 116 ist um eine um 45° gegen die Horizontale geneigte Achse 117 in Funktion der Zeit um exakt definierte Winkelbeträge im Sinne des Doppelpfeils 118 schwenkbar. Dazu besitzt es eine im Oberteil 103 starr befestigte Schwenkeinrichtung 119. Zur Verminderung des Trägheitsmomentes des beweglichen Strahlablenkungsorgans 116 ist es auch vorteilhaft, dem Schwingspiegel elliptische Form zu geben, mit der grossen Achse in Richtung der Achse 117 und der kleinen Achse quer dazu in der Ebene des Schwingspiegels. Diese Massnahme erleichtert die Erreichung hoher Ablenkfrequenzen.

Vom Strahlablenkorgan 116, im vorliegenden Fall von der Unterseite des Schwingspiegels, wird das parallelstrahlige Strahlenbündel 115 nach unten auf einen um 45° gegen die Horizontale geneigten, als zweites optisches Mittel wirkenden, starr mit dem Oberteil 103 verbundenen Umlenkspiegel 120 geworfen, dessen Fläche um 90° gegenüber der Nullage der Fläche des Strahlablenkorgans 116 (Schwingspiegel) gedreht ist. Der Umlenkspiegel 120 wirft das ihm vom Strahlablenkorgan 116 zugeführte Licht in horizontaler Richtung (das heisst senkrecht zur Zeichenebene der Fig. 5) als Messstrahl nach vorn; in Fig. 5 dargestellt als kleiner Kreis mit Mittelpunkt im Umlenkspiegel 120. Der Messstrahl tritt durch ein in Fig. 5 nicht gezeichnetes Fenster im Oberteil 103 nach aussen. Schwingt das Strahlablenkorgan 116, wie beschrieben, so schwenkt das vom Umlenkspiegel 120 nach vorn abgelenkte Strahlenbündel relativ zum Richtstrahler-Oberteil in einer vertikalen Ebene. Da nun aber, wie beschrieben, der Oberteil 103 und damit auch das erste optische Mittel (Parabolspiegel 114), das Strahlablenkorgan 116 und das zweite optische Mittel (Umlenkspiegel 120) mit dem Oberteil 103 mitrotieren, rotiert die genannte vertikale Ebene des aus dem Oberteil durch ein Fenster in demselben austretende Sendelicht gleichfalls um die Achse 104. Durch den Zeitpunkt des Sendelichtimpulses und die zugehörige Drehungsposition des Oberteils 103 ist deshalb der momentane Azimutwinkel $\varphi$ und durch die momentane Schwenkstellung des Schwingspiegels des Strahlablenkorgans 116 der momentane Elevationswinkel $\psi$ jedes einzelnen Messstrahls des Richtstrahlers exakt gegeben, beziehungsweise definiert.

Als erstes optisches Mittel 114 kann anstelle des Parabolspiegels auch eine sogenannte Vario-Optik mit Umlenkspiegel vorgesehen werden, welche eine gesteuerte Variation der Bündelung des Sendelichtbündels 113 und dadurch auch des nach aussen geworfenen Messstrahls erlaubt.

Von aussen reflektiertes Licht des Messstrahls gelangt über ein weiteres, in Fig. 5 nicht gezeichnetes, Fenster im Oberteil 103 auf einen um 45° gegen die Horizontale geneigten zweiten Umlenkspiegel 121. In Fig. 5 ist das Empfangslichtbündel auf dem Umlenkspiegel 121 als Kreis mit einem Kreuz dargestellt. Vom zweiten Umlenkspiegel 121 gelangt das Empfangslichtbündel senkrecht nach unten auf die obere Seite des beidseitig spiegelnden Strahlablenkorgans 116 (Schwingspiegel) und von da über einen weiteren Parabolspiegel 122 als konvergentes Empfangsstrahlenbündel 123 vorzugsweise zur Unterdrückung von Fremdlicht durch ein schmalbandiges Interferenzfilter 124 zu einem Empfänger 125. Der Empfänger 125 wandelt die empfangene Strahlung in elektrische Signale um, welche in einem Rechner verarbeitet werden.

Im Richtstrahler 100 sind, beispielsweise im Oberteil 103, auch die zugehörigen Hilfseinrichtungen, wie Stromversorgungsteile, Steuer- und Regeleinheiten für den Antrieb 105 und die Schwenkeinrichtung 119 sowie die Bauteile des Rechners untergebracht. Dies ist in Fig. 5 durch eine Reihe von symbolisch dargestellten elektronischen Steckkarten 126 dargestellt.

Über Leitungen 127 wird der Richtstrahler mit elektrischer Energie, beispielsweise aus einem Wechselstromnetz oder aus einer Batterie versorgt. Über weitere Leitungen 128 gibt der Richtstrahler 100 die von ihm erarbeiteten Ausgangssignale, beispielsweise in codierter Form ab. Diese Ausgangssignale können in an sich bekannter Weise beispielsweise als Zustandsmeldungen und/oder Alarmmeldungen zur Anzeige gebracht werden.

Es ist noch zu erwähnen, dass die vom Richtstrahler 100 entsprechend der Pulsfolgefrequenz des Impulssenders 112 abgegebenen Messstrahlen 41 (Fig. 2, 3) beziehungsweise 42, 43, 44 (Fig. 4) Brennflecken 45, 46, 47, 48, 49 (Fig. 4) im Bereich der virtuellen Linien beziehungsweise virtuellen Flächen 29, 36 (Fig. 3) erzeugen. Dabei ist es vorteilhaft einerseits die Grösse dieser Brennflecken und anderseits die Pulsfolgefrequenz des Impulssenders 112 so zu wählen beziehungsweise zu steuern, dass diese Brennflecken nacheinander und in sich folgenden Umgängen (Rotation des Richtstrahlers 100) und durch sich verändernde vertikale Ablenkung der Messstrahlen (Strahlablenkorgan 116) eine möglichst lückenlose Bedeckung der gewählten virtuellen Flächen ergibt. Im Falle der Verwendung eines Lichtsenders (auch Infrarot) als Impulssender 112 ist es vorteilhaft die Grösse der Brennflecken mittels einer ihr zugeordneten Regel- und Steuereinheit entlang beispielsweise der ersten virtuellen Fläche in Abhängigkeit ihrer jeweiligen Entfernung vom Richtstrahler 100 zu regeln.

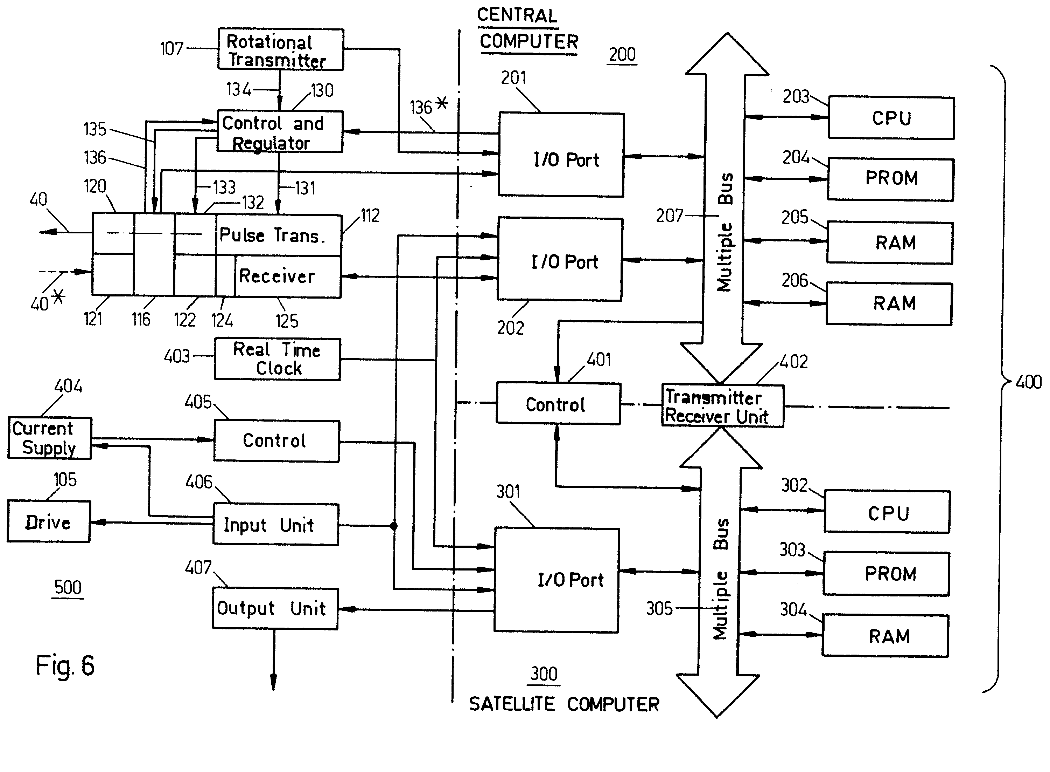

Die Fig. 6 zeigt ein Blockschaltbild eines Ausführungsbeispiels einer Vorrichtung zur Ausführung des Verfahrens.

Der Impulssender 112 sendet im Infrarotbereich Laserimpulse deren Pulsfolgefrequenz von einer Regel- und Steuereinheit 130 über eine Leitung 131 gesteuert ist. Die Sendeimpulse des Impulssenders 112 durchlaufen eine Vario-Optik 132, deren Fokussierung von der Regel- und Steuereinheit 130 über eine Steuerleitung 133 gesteuert ist. Die Sendeimpulse werden dann vom Strahlablenkorgan 116 entsprechend seiner momentanen Stellung abgelenkt und dem Umlenkspiegel 120 zugeführt. Der Umlenkspiegel 120 lenkt die Sendeimpulse als Messstrahl 40 in eine durch die momentane Drehstellung des Richtstrahlers 100 und die momentane Schwenkstellung des Strahlablenkorgans 116 durch Azimut φ und Elevation ψ definierte Richtung. Das sich ergebende Sendelichtbündel ist entsprechend der momentanen Einstellung der Vario-Optik 132 fokussiert.

Die Regel- und Steuereinheit 130 steuert aufgrund der ihr vom Drehgeber 107 über eine Leitung 134 und vom Strahlablenkorgan 116 über eine Leitung 135 zugeführten und auch von einem Zentralrechner 200 über eine Leitung 136* gelieferten Informationen die korrekte Stellung des Strahlablenkorgans um den Messstrahl 40 genau in eine definierte Richtung φ, ψ zu richten. Zur Verbesserung dieses Steuervorganges führt eine Leitung 136 der Steuer- und Regeleinheit 130 Information über die tatsächliche Stellung dieses Strahlablenkorgans zu.

Das vom Hintergrund des überwachten Geländes 1 (Fig. 1) oder Raumes 22 (Fig. 2) oder von einem Objekt 40 (Fig. 2, 3) reflektierte Empfangslicht 40* gelangt über den zweiten Umlenkspiegel 121, das Strahlablenkorgan 116 und den weiteren Parabolspiegel 122 durch das schmalbandige Interferenzfilter 124 zum Empfänger 125. Durch die gewählte Bauart (Fig. 5) des Richtstrahlers 100 ist Gewähr geboten, dass die Empfangseinrichtung mit den Teilen 121, 116, 122, 124 und 125 stets genau in der Gegenrichtung zum ausgesandten Messstrahl 40 ausgerichtet ist.

Damit nun das durch die Ansprüche definierte Verfahren mit dem Richtstrahler 100 ausgeführt werden kann enthält der Richtstrahler einen aus dem Zentralrechner 200 und einem Satellitenrechner 300 bestehenden Rechner 400 und eine Gruppe 500 von dem Rechner 400 zugeordneten Hilfseinrichtungen.

Der Zentralrechner 200 weist eine erste Eingabe/Ausgabe-Einheit (I/O-Port) 201 und eine zweite Eingabe/Ausgabe-Einheit (I/O-Port) 202 auf, ausserdem eine Zentraleinheit (CPU) 203, einen Programm-Speicher (PROM) 204, einen ersten Schreib-Lesespeicher mit wahlfreiem Zugriff (RAM) 205 und einen zweiten Schreib-Lesespeicher mit wahlfreiem Zugriff (RAM) 206 auf, welche alle über eine erste Vielfach-Sammelschiene (BUS) 207 untereinander in an sich bekannter Weise in Verbindung stehen, beziehungsweise gebracht werden.

Der Satellitenrechner 300 weist eine Eingabe/Ausgabe-Einheit (I/O-Port) 301, ausserdem eine Zentraleinheit (CPU) 302, einen Programmspeicher (PROM) 303 und einen Schreib-Lesespeicher mit wahlfreiem Zugriff (RAM) 304 auf, welche alle über eine zweite Vielfach-Sammelschiene (BUS) 305 untereinander in an sich bekannter Weise in Verbindung stehen, beziehungsweise gebracht werden.

Dem Zentralrechner 200, beziehungsweise seiner Vielfach-Sammelschiene 207 und dem Satellitenrechner 300, beziehungsweise seiner Vielfach-Sammelschiene 305 ist eine gemeinsame Sammelschienensteuereinheit 401 zugeordnet.

Zwischen der ersten Vielfach-Sammelschiene 207 des Zentralrechners 200 und der zweiten Vielfach-Sammelschiene 305 des Satellitenrechners 300 ist für den Verkehr zwischen beiden Sammelschienen 207 und 305, beziehungsweise zwischen dem Zentralrechner 200 und dem Satellitenrechner 300 ein Sende-Empfänger (Transceiver) 402 angeordnet.

Dem Rechner 400 sind folgende Hilfseinrichtungen zugeordnet: eine Echtzeit-Uhr 403, welche sowohl als Zeit- beziehungsweise Frequenzbasis des Drehgebers 107 und der Steuer- und Regeleinheit 130 als auch für die Steuerung der genannten Rechner vorgesehen ist, Stromversorgungsteile 404 mit zugehöriger Kontrolleinheit 405, eine Eingabe-Einheit 406 sowohl für die Ein- und Ausschaltung des Richtstrahlers 100 als auch für die Wahl des gewünschten Betriebszustandes. Über diese Eingabe-Einheit 406 erfolgt auch die Einschaltung der Antriebseinrichtung 105. Als weitere Hilfseinrichtung ist eine Ausgabe-Einheit 407 vorgesehen – für die Ausgabe der mittels des Richtstrahlers 100 gewonnenen Information, also beispielsweise Zustandsmeldung des überwachten Geländes oder Raumes, Feststellung beziehungsweise Meldung bestimmter Veränderungen, Koordinaten und weitere Informationen bezüglich erkannter Objekte, Alarmsignale usw. Solche Informationen können vorzugsweise durch kodierte Signale abgegeben werden, welche geeignet sind in an sich bekannten Anzeigeeinrichtungen und/oder Alarmeinrichtungen verwendet zu werden.

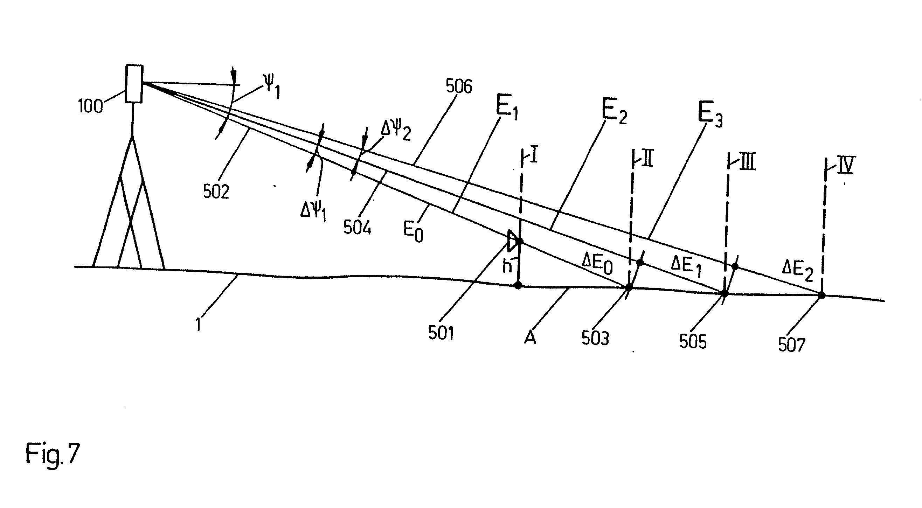

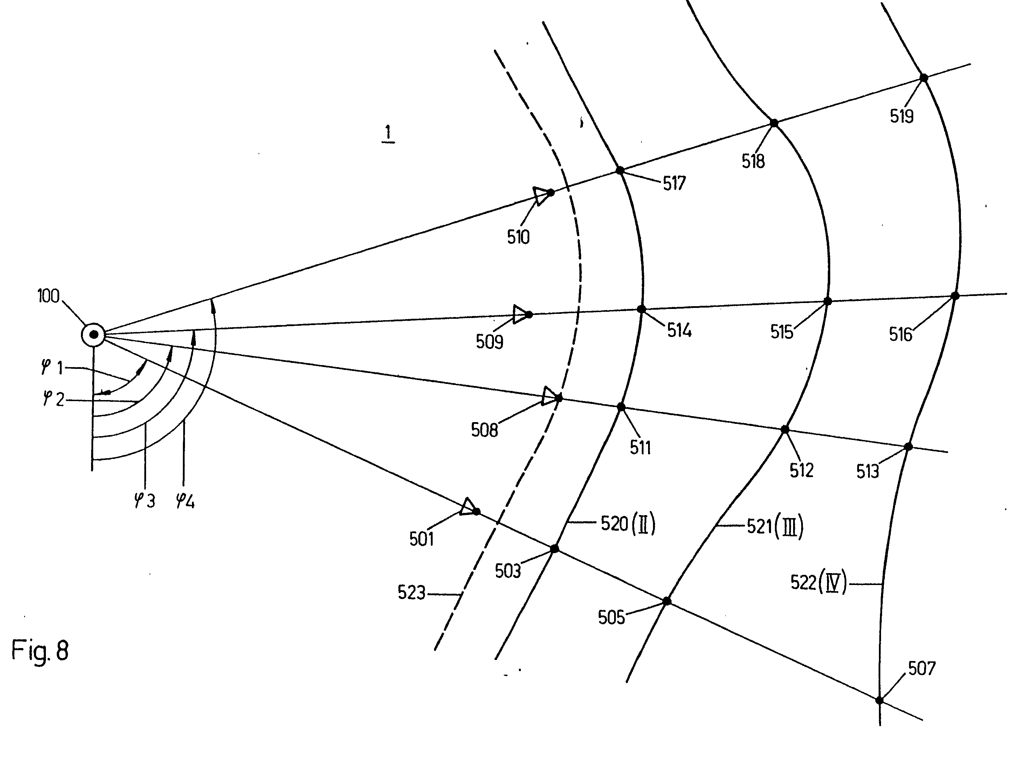

Für eine Vorrichtung gemäss dem vorstehend beschriebenen Ausführungsbeispiel wird nun deren Arbeitsweise anhand der Figuren 5 und 6, sowie der weiteren Figuren 7 und 8 bei einem bestimmten Anwendungsfall erläutert.

Dabei zeigt die Figur 7 einen schematischen Aufriss des Messstrahlenverlaufs bei der Festlegung bestimmter virtueller Flächen. Dieser Aufriss stellt die Verhältnisse in einer vertikalen Ebene mit dem Azimut $\varphi_1$ durch die Achse des Richtstrahlers 100 dar, in welcher zur erstmaligen Eingabe von Koordinaten einer ersten virtuellen Fläche I in der Höhe h zeitweise ein Retroreflektor 501 angeordnet ist. Ein Messstrahl 502 trifft den Retroreflektor 501 und weist dabei einen Elevationswinkel $\psi_1$ auf. Die Entfernung vom Richtstrahler 100 zum Reflektor 501 in der ersten virtuellen Fläche I in Richtung des Messstrahls 502 ist $E_0$. Entfernt man nun den Retroreflektor 501 wieder, so kann ein Messstrahl in der genannten vertikalen Ebene und unter dem Elevationswinkel $\psi_1$ nunmehr das Gelände 1 treffen. Dies ergibt bis zum Auftreffpunkt 502 einen um den Betrag $\Delta E_0$ längeren Entfernungsvektor, wobei $E_0 + \Delta E_0 = E_1$.

Eine zweite virtuelle Fläche II wird nun durch den Auftreffpunkt 503 festgelegt. In der gleichen vertikalen Ebene, in welcher der Messstrahl 502 verlief, kann nun mit einer Elevationswinkeldifferenz $\Delta\psi_1$ ein weiterer Messstrahl 504 ausgesandt werden. Der weitere Messstrahl 504 trifft das Gelände 1 im weiteren Auftreffpunkt 505. Durch diesen weiteren Auftreffpunkt ist nun auch die Lage einer dritten virtuellen Fläche III festgelegt. Wie aus Figur 7 ersichtlich ist, gilt $E_2 = E_1 + \Delta E_1$. In analoger Weise wird durch einen um die Elevationswinkeldifferenz $\Delta\psi_2$ höher verlaufenden Messstrahl 506 ein Auftreffpunkt 507 auf dem Gelände 1 gebildet, durch welchen eine vierte virtuelle Fläche IV festgelegt wird. Auch hier gilt in analoger Weise: Entfernungsvektor $E_3 = E_2 + \Delta E_2$.

Zu beachten ist, dass durch die Elevationswinkeldifferenzen $\Delta\psi_1$ und $\Delta\psi_2$ die Entfernungsdifferenzen $\Delta E_1$ und $\Delta E_2$ zwischen der zweiten und dritten sowie der dritten und vierten virtuellen Fläche festgelegt sind. Ausserdem ist durch die Höhe h und die Differenz $\Delta E_0$ beziehungsweise den Elevationswinkel $\psi_1$ der horizontale Abstand A der zweiten virtuellen Fläche II von der ersten virtuellen Fläche I, oder dem Retroreflektor 501 bestimmt.

Im vorliegenden Falle ist angenommen, dass die virtuellen Flächen I, II, III und IV vertikal verlaufen. Wählte man die virtuellen Flächen kugelförmig mit dem Richtstrahler 100 als Zentrum, so ergäben sich rechnerische Vereinfachungen, da die Entfernungsvektoren aller Punkte einer solchen Fläche gleich sind.

Die Figur 8 zeigt einen schematischen Grundriss des Verlaufes von Messstrahlen bei der Festlegung bestimmter virtueller Flächen. Unter den Azimutwinkeln $\varphi_1$, $\varphi_2$, $\varphi_3$ und $\varphi_4$ und jeweils unter den Elevationswinkeln $\psi_1$, $\psi_1 + \Delta\psi_1$ und $\psi_1 + \Delta\psi_1 + \Delta\psi_2$ vom Richtstrahler 100 ausgehende Messstrahlen treffen einerseits die zeitweise im Gelände 1 aufgestellten Retroreflektoren 501, 508, 509 und 510 und anderseits, wenn sie in der Vertikalebene entsprechend Azimut $\varphi_1$ verlaufen, die Auftreffpunkte 503, 505 und 507 im Gelände 1. Verlaufen die Messstrahlen jedoch in der Vertikalebene entsprechend dem Azimut $\varphi_2$, so treffen sie je nach ihrem Elevationswinkel die Auftreffpunkte 511, 512 und 513. Verlaufen die Messstrahlen in der Vertikalebene entsprechend dem Azimut $\varphi_3$, so ergeben sich je nach ihrem Elevationswinkel die Auftreffpunkte 514, 515 und 516. Verlaufen die Messstrahlen schliesslich in der Vertikalebene entsprechend dem Azimut $\varphi_4$, so treffen sie je nach ihrem Elevationswinkel die Auftreffpunkte 517, 518 und 519.

Die Auftreffpunkte 503, 511, 514 und 517 bestimmen somit eine virtuelle Linie 520 im Gelände 1, welche die Projektion der in diesem Fall vertikal angenommenen virtuellen Fläche II darstellt. In gleicher Weise bestimmen die Auftreffpunkte 505, 512, 515 und 518 eine weitere virtuelle Linie 521 im Gelände 1, welche die Projektion der in diesem Fall vertikal angenommenen weiteren virtuellen Flächen III darstellt. Schliesslich bestimmen die Auftreffpunkte 507, 513, 516 und 519 eine zusätzliche virtuelle Linie 522 im Gelände 1, welche die Projektion der in diesem Fall vertikal angenommenen zusätzlichen virtuellen Flächen IV darstellt.

Es ist somit ersichtlich, dass durch die zeitweise Anordnung von Retroreflektoren die für die Festlegung virtueller Linien (503, 505, 507, Figuren 7 und 8) beziehungsweise für die Festlegung virtueller Flächen (I, II, III, IV; Figur 7, Figur 8) notwendigen Koordinatenwerte auf einfache Weise mittels des Richtstrahlers 100 bestimmt werden können. Durch entsprechende Programmierung des Zentralrechners 200 (Figur 6) lassen sich die so ermittelten Koordinatenwerte speichern und auswerten.

Es ist aber auch möglich, als Ausgangsbasis für die Festlegung der virtuellen Linien und virtuellen Flächen eine erste virtuelle Linie 523 im Gelände 1 frei festzulegen und von dieser virtuellen Linie 523 ausgehend weitere virtuelle Linien in jeweils frei gewählten festen Abständen festzulegen. Die sich so ergebenden Koordinatenwerte können dann beispielsweise manuell über die Eingabe-Einheit 301 des Rechners eingegeben werden. Je nach den topografischen Verhältnissen eines Anwendungsfalles ist die erste oder zweite genannte Methode der Festlegung der virtuellen Linien und Flächen vorteilhafter.

Vorzugsweise kann die Linie 523 auch äquidistant zu einer zuvor mittels Retroreflektoren (501, 508, 509, 510) und Auftreffpunkten 503, 511, 514, 517 bestimmten virtuellen Linie 520 angenommen werden. Dabei kann diese Linie 523 vorzugsweise in einem solchen Abstand von der virtuellen Linie 520 angenommen werden, welcher dem Minimum unter den Abständen von den Retroreflektoren 501, 508, 509, 510 zu den zugehörigen Auftreffpunkten 503, 511, 514, 517 entspricht. Ein solches Vorgehen vereinfacht die vom Rechner 400 auszuführenden Rechenoperationen.

Bei einer Vorrichtung gemäss dem vorstehend beschriebenen Ausführungsbeispiel ist die Arbeitsweise wie folgt:

Mittels der Eingabe-Einheit 406 wird die Vorrichtung in Betrieb gesetzt. Dabei nimmt die Eingabe-Einheit mehrere Aufgaben wahr und leitet verschiedene Massnahmen ein und zwar

1. Einschalten der Stromversorgungsteile 404 und der Antriebseinrichtung 105.
2. Festlegung des Abstandes zwischen zwei virtuellen Flächen.
3. Aufnahme (einmalig) der Koordinaten einer virtuellen Fläche.
4. Normaler Betrieb.
5. Abschalten der Vorrichtung.

1.1 Beim Einschalten wird gleichzeitig der Zentralrechner 200 und der Satellitenrechner 300 in eine definierte Ausgangsstellung verbracht.

2.1 Die Festlegung des Abstandes zwischen den beiden virtuellen Flächen kann anschliessend an 1.1 per Hand erfolgen. Dabei werden in den ersten Schreib-Lesespeicher 205 des Zentralrechners 200 die Konstanten eingegeben, um die sich die virtuellen Flächen unterscheiden. Dabei sind beispielsweise drei virtuelle Flächen durch zwei konstante Winkel verknüpft.

3.1 Ein weiterer der Eingabe-Einheit 406 eingegebener Befehl «Aufnahme einer virtuellen Fläche» aktiviert den im Programmspeicher 204 des Zentralrechners dafür gespeicherten Programmablauf. Dabei verbleibt der Satellitenrechner 300 in seiner Ausgangsstellung. Die Vorrichtung vollzieht nunmehr folgende Schritte:

3.1.1 Empfänger 125 wird auf niedrigste Empfindlichkeitsstufe eingestellt.

3.1.2 Ganzer vom Richtstrahler 100 erfassbarer Raum wird lückenlos mit Messstrahlen abgetastet, das heisst über ganzen Azimut- und Elevationsbereich.

3.1.3 Abtastzeilen werden mit maximalen Brennflecken durchlaufen.

3.1.4 Aufnahme und Speicher charakteristischer Werte ausgewählter Orte die durch erhöhtes Reflexionsvermögen, beispielsweise eines dort vorübergehend angebrachten Retroreflektors, eine erhöhte Intensität des Empfangslichtes ergeben. Beendigung der ersten Aufnahmephase.

3.1.5 Rechnerisches Verbinden der nach 3.1.4 gewonnenen Werte (Koordinaten) zu einer Funktion $E(\varphi, \psi)$. Diese Funktion ist jetzt gerätespezifisch hinsichtlich einer definierten Aufgabe und des Aufstellungsortes des Richtstrahlers. Die Funktion $E(\varphi, \psi)$ wird im ersten Schreib-Lesespeicher 204 des Zentralrechners 200 gespeichert und bleibt über die gesamte Einsatzzeit unverändert.

3.1.6 Weitergabe der partiellen Funktionswerte $E(\varphi, \psi)$ vom Zentralrechner 200 an die Steuer- und Regeleinheit 130 zusammen mit den konstanten Winkeln $\Delta \psi$ für den Abstand der virtuellen Flächen (siehe vorstehend 2.1) zur Steuerung des Strahlablenkorgans 116. Ausserdem wird der Steuer- und Regeleinheit 130 eine konstante Impulsfrequenz (des Impuls-Senders 112) zugeführt.

3.1.7 Beginn der zweiten Aufnahmephase zur Erzeugung der Ist-Werte der Entfernungen für die einzelnen vorgesehenen virtuellen Flächen; aus den Ist-Werten für die virtuelle Fläche II (Figur 8) werden durch Subtraktion des Wertes A, (Figur 7) die zugehörigen Sollwerte für die virtuelle Fläche I (Figur 7, Figur 8) abgeleitet.

Diese Werte werden im ersten Schreib-Lesespeicher 205 des Zentralrechners 200 gespeichert und bleiben über die gesamte Einsatzzeit konstant.

Die Entfernung-Ist-Werte für äussere virtuelle Flächen III, IV; Figur 7, Figur 8 werden von den entsprechenden Ist-Werten der nächsten inneren virtuellen Flächen errechnet.

Die entstehenden Differenzwerte $\Delta E$ werden zusammen mit den Entfernungs-Istwerten als Ist-Funktion im ersten Schreib-Lesespeicher 205 des Zentralrechners 200 gespeichert und stellen für einen Abtastzyklus die Sollwerte dar. Die Einspeicherung aller Sollwerte im ersten Schreib-Lesespeicher 205 geschieht zeitlich geordnet.

3.1.8 Löschung der vorstehend unter 3.1.4 aufgeführten charakteristischen Werte.

4.1 Nachdem die Vorrichtung auf die vorbeschriebene Weise Sollwerte erarbeitet hat, ist sie mit dem Programm im Programmspeicher 204 im Zentralrechner 200 und dem Programm im Programmspeicher 303 des Satellitenrechners 300 in der Lage, den Normalbetrieb für die Überwachung aufzunehmen und durchzuführen. Dies geschieht üblicherweise durch einen Steuerbefehl über die Eingabe-Einheit 406 an den Zentralrechner 200 und den Satellitenrechner 300.

Das im Programmspeicher 204 gespeicherte Programm ist für den spezifischen Verwendungszweck der Vorrichtung entwickelt. Es beinhaltet im Falle des Zentralrechners 200 neben den Verfahrensschritten zur Aufnahme der virtuellen Flächen die Schritte zur Einspeicherung der eingebenden Entfernungsmesswerte, ihren Vergleich mit eingespeicherten Sollwerten zur Gewinnung von einzuspeichernden Differenzen und die Ausgabe von eingespeicherten Sollwerten für definierte Winkelbeträge im Sinne des Doppelpfeils 118 des Strahlablenkorgans 116 (Figur 5) sowie für den Drehgeber 107 (Figur 5) und für deren Eingabe in die Regel- und Steuereinheit 130 (Figur 6).

Im angenommenen Ausführungsbeispiel erfolgt die Umschaltung von der vorstehend erwähnten Massnahme (Schritt) 3 zur Massnahme (Schritt) 4 automatisch nach Erfüllung der Massnahmen (Schritte) 1 bis 3 und Feststellung der Betriebsart (vertikale oder horizontale Orientierung der Drehachse des Richtstrahlers 100) was unterschiedliche Programme für die Verarbeitung von Messwerten nach sich zieht.

Durch das Zusammenwirken des Rechners 400 mit dem Richtstrahler, beziehungsweise infolge der gesteuerten Drehbewegung des Richtstrahlers 100 und der gesteuerten Schwenkbewegung des Strahlablenkorgans 116 fährt die Vorrichtung die Funktion $E(\varphi, \psi)$ ab, und zwar mehrmals, je nach Anzahl der virtuellen Flächen.

Da sich der Richtstrahler 100 nur mit annähernd konstanter Winkelgeschwindigkeit dreht, die winkelmässige Abtastung jedoch mit höchstmöglicher Genauigkeit erfolgen muss, wird die Abgabe der Strahlungs-Impulse des Impulssenders 112 (Figur 5, Figur 6) mit Hilfe der Momentanwerte des Drehgebers 107 über die Regel- und Steuereinheit 130 so gesteuert, dass die Impulsfrequenz zwar keine konstante Frequenz mehr ist, jedoch die einzelnen Impulse jeweils in der ihnen zugeordneten Winkellage abgegeben werden. Die hierfür nötigen Korrekturen werden aufgrund in den Schreib-Lese-Speichern 205 und 206 des Zentralrechners 200 gespeicherter Information durch die Regel- und Steuereinheit 130 vorgenommen.

Aus jedem durch Reflexion gewonnenen Empfangsimpuls wird ein Entfernungs-Ist-Wert gebildet und im Schreib-Lese-Speicher 205 (Figur 6) «on-line», das heisst schritthaltend, eingespeichert. Anschliessend wird der im Schreib-Lese-Speicher 205 eingespeicherte Entfernungs-Soll-Wert, der den gleichen Azimut-$\varphi$ besitzt, aber einer inneren virtuellen Fläche, beziehungsweise der Elevation $\psi_0$ entspricht, von dem Entfernungs-Ist-Wert subtrahiert. Die entstehende Ist-Differenz $\Delta E = f(\varphi, \psi)$ wird nunmehr mit der im Schreib-Lese-Speicher 205 gespeicherten Soll-Differenz verglichen. Für den Fall, dass die Soll-Ist-Wertdifferenz ungleich null ist, wird die Ist-Wert-Differenz als neue Soll-Wert-Differenz in den Schreib-Lese-Speicher 205 und darüber hinaus auch in den Schreib-Lese-Speicher 206 eingespeichert. Die Soll-Wert-Entfernungen im Schreib-Lese-Speicher 205 für die virtuellen Flächen – bis auf diejenigen der virtuellen Fläche I (Figur 7) – werden gleichfalls durch die Ist-Wert-Entfernungen ersetzt, bilden also für den nächsten Abtastzyklus die Sollwerte.

Normalerweise, bei unveränderter Peripherie, ist die Soll-Ist-Wert-Differenz gleich null, das heisst keine neuen Werte werden eingespeichert.

Sobald nun ein Gegenstand in die Peripherie oder in die virtuelle Fläche eintritt, wird diese Differenz grösser als null und damit in der vorbeschriebenen Weise im Schreib-Lese-Speicher 205 und 206 eingespeichert.

Der Satellitenrechner 3 (Figur 6) besorgt sich mit Hilfe der Sammelschiene-Steuereinheit 401 über den Sende/Empfänger 402 die zeitlich und örtlich codierten Differenzen $\Delta E = f(\varphi, \psi)$ unter Umständen auch die Funktionswerte $E(\varphi, \psi)$ aus dem Schreib-Lesespeicher 206 des Zentralrechners 200 und speichert sie in seinen Schreib-Lese-Speicher 304 ein.

Priorität besitzt allerdings der Zentralrechner 200, sodass der Satellitenrechner 300 Daten nur dann abfragen kann, wenn der Zentralrechner 200 pausiert.

Im Programmspeicher 303 des Satellitenrechners 300 befinden sich die Kriterien für die Eliminierung von Fehlalarmen durch unerhebliche Einflüsse, sowie zur Selbstüberprüfung der Vorrichtung. Unter unerheblichen Einflüssen sind zum Beispiel Vögel, Blätter, Schnee, sich bewegende Kleintiere, Bälle und dergleichen zu verstehen. Erhebliche Einflüsse sind dagegen beispielsweise eindringende Personen.

Der Satellitenrechner 300 besitzt über eine eigene Eingabe/Ausgabe-Einheit 301 Verbindung zur Ausgabe-Einheit 407 und zur Echtzeit-Uhr 403. Er übernimmt die Überprüfung des elektrischmechanischen Zustandes der Vorrichtung über die entsprechenden Kontroll-Leitungen. Die nach örtlichen und zeitlichen Zusammenhängen verarbeiteten Differenzen lösen je nach Vergleichskriterien aus dem Programmspeicher 303 einen Voralarm beziehungsweise Alarm aus, den der Satellitenrechner 300 an die Ausgabe-Einheit 407 weitergibt.

Alle vom Satellitenrechner 300 in seinem Schreib-Lese-Speicher 304 eingespeicherten Differenzen werden nach Ablauf einer bestimmten Zeitspanne, welche von der Echtzeit-Uhr 403 abgeleitet wird, nach Eingabe der zeitlich letzten Differenz gelöscht. Dieser Vorgang wiederholt sich periodisch jeweils nach Ablauf dieser Zeitspanne.

Durch die gewählte Art der Verarbeitung im Zentralrechner 200 zusammen mit der letztgenannten Massnahme im Satellitenrechner 300 wird es ermöglicht, dass beispielsweise bei Anordnung des Richtstrahlers 100 auf einem Gebäude und Überwachung der Umgebung die Vorrichtung auf Gebäude, die im Arbeitsbereich des Richtstrahlers stehen, ebensowenig mit Alarm reagiert, wie auf eine wachsende Schneedecke. Letztere wird allein dadurch erkannt, dass die Distanzen zwischen den äusseren virtuellen Flächen konstant bleiben, jedoch die Differenz zwischen den virtuellen Flächen I und II (Figur 7, Figur 8) sich ändert. Bei aufkommendem Nebel ändern sich die Differenzen der äusseren virtuellen Flächen zeitlich proportional, beziehungsweise nacheinander, diejenigen der innersten virtuellen Flächen zuletzt. Vögel und lose Blätter – welche keinen Alarm auslösen sollen – werden dadurch eliminiert, dass die (letzte) Differenz zwischen der letzten und der vorletzten Fläche $\leqslant 0$ wird, und die vorletzte Differenz unverändert bleibt. Da der Satellitenrechner 300 die Differenzen immer sofort aus dem Schreib-Lese-Speicher 206 abfragt und dabei löscht, kann dieser Schreib-Lese-Speicher 206 kleingehalten werden.

Neben der Einspeicherung von Entfernungs-Messwerten und dem Vergleich mit Soll-Werten, aus dem Differenzen entstehen, die ebenfalls eingespeichert werden, hat der Zentralspeicher 200 die Aufgabe, der Regel- und Steuereinheit 130 die dem eingehenden Entfernungs-Messwert folgenden Wert bezüglich seiner Auslösungszeit zugehörigen Winkeldaten für den Drehgeber 107 und das Strahlablenkorgan 116 zur Verfügung zu stellen. Die Regel- und Steuereinheit 130 ermittelt mit den Werten aus dem Drehgeber 107 in der Regelschleife die Zeit, bei der das Strahlablenkorgan 116 die vom Zentralrechner 200 angegebene Stellung einnehmen muss, bei welcher auch der Drehgeber und damit der drehbare Oberteil 103 (Figur 5) diejenige Position einnimmt, bei welcher der Strahlungsimpuls für die Gewinnung des nächsten Entfernungs-Messwertes erzeugt wird. Die genaue zeitliche und örtliche (Richtung) Korrelation der Strahlungsimpulse ist unerlässlich für die Reproduktion der an der Peripherie entstehenden Entfernungs-Messwerte. Dies geschieht zur Vermeidung von undefinierten Differenzen.

Werden als Strahlungsimpulse optische, beispielsweise infrarote Strahlungsimpulse benützt, so kann dem Impulssender 112 (Figur 6) eine Variooptik 132 (Figur 6) zugeordnet werden und die Brennweite derselben durch die Regel- und Steuereinheit 130 in Abhängigkeit von den Entfernungs-Messwerten gesteuert werden.

5. Abschalten der Vorrichtung

Man unterscheidet zwei Fälle, nämlich,

5.1 Abschalten innerhalb der Einsatzzeit. In diesem Falle bleibt die Stromversorgung für Rechner 400 erhalten, nur die Peripherie-Einheiten mit Mess- und Regelteil werden von der Stromversorgung getrennt.

5.2 Abschalten des Gerätes generell.

Alle Einheiten werden von der Stromversorgung getrennt, das heisst in spannungslosen Zustand gebracht.

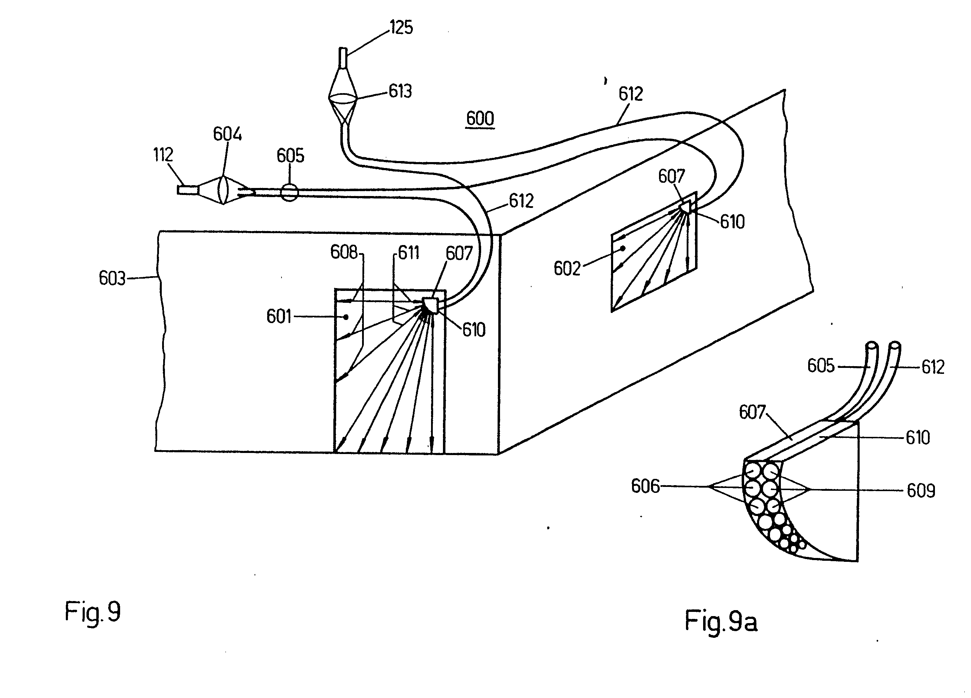

Ein weiteres Ausführungsbeispiel wird nunmehr anhand der Fig. 9, 10, 11 und 12 erläutert. Dabei zeigt die Fig. 9 eine Anordnung mit einem Strahlaufteilungssystem.

In der Figur 9 stellt 600 das Strahlaufteilungssystem als Ganzes dar, welches zur Anwendung der Erfindung zur Überwachung diskreter Flächen, beispielsweise einer Türöffnung 601 und einer Fensteröffnung 602 eines Gebäudes 603 vorgesehen ist.

Das Strahlaufteilungssystem 600 ist einerseits an einen Impulssender 112 und andererseits an einen Empfänger 125 angeschlossen. Über ein Senderkopplungsorgan 604, beispielsweise eine erste Linsenanordnung zur Kopplung einer Laserdiode des Impulssenders 112 an Glasfasern eines aus einem oder mehreren Glasfaserbündeln vorzugsweise unterschiedlicher Länge bestehenden Sendeleitersystems 605 wird die Sendeenergie durch die einzelnen Fasern jedes Glasfaserbündels je einer Sendelinse 606 eines Strahlaufteilers 607 zugeführt und von diesen Linsen mit unterschiedlicher Richtung in einer zur Türebene parallelen Fläche als Sendestrahlen 608 ausgestrahlt. Die hierbei entstehenden Sendestrahlen 608 sind gegen die Türumrandung gerichtet und werden, sofern die Türöffnung frei ist, von dieser reflektiert. Empfangslinsen 609 des Strahlsammlers 610 entnehmen den mehr oder weniger diffusen Reflexionen bestimmten Sendestrahlen zugeordnete, diesen entgegengesetzt verlaufende Empfangsstrahlen 611 und führen die Empfangsenergie über die einzelnen Fasern eines Glasfaserbündels eines Empfangsleitsystems 612 über ein weiteres Linsensystem eines Empfängerkoppelsorgans 613 dem Empfänger 125 zu.

In Fig. 9a sind Details des vorzugsweise konstruktiv zusammengefassten Strahlaufteilers 607 und der Strahlsammler 609 dargestellt. Die Linsen 606 und 609 können dabei vorzugsweise in an sich bekannter Weise konstruktiv mit den jeweiligen Enden der zugeordneten Glasfasern vereinigt sein.

Das Strahlaufteilungssystem 600 erstreckt sich vom Impulssender 112 zu den zu überwachenden Flächen 601, 602, und allenfalls weiteren, und zurück zum Empfänger 125. Vorzugsweise werden die zum Sendeleitsystem 605 und die zum Empfangsleitsystem 612 gehörenden Glasfaserbündel unter optischer Entkopplung in einem gemeinsamen Kanal, beispielsweise Rohr, gegen Beschädigung geschützt, beispielsweise im Innern des Gebäudes 1 verlegt.

Zur Gewinnung von richtungsabhängiger Information bezüglich die überwachten Flächen durchdringender Objekte kann eine Überwachung in räumlich hintereinanderliegenden Flächen erfolgen, um zeitliche Unterschiede des Durchdringens der Flächen zu gewinnen. Vorzugsweise werden dann die jeweils zugehörigen Strahlaufteiler 607 und Strahlsammler 610 in benachbarten Ecken der zu überwachenden Flächen 601 und 602 angeordnet.

Das vorstehend beschriebene weitere Ausführungsbeispiel lässt zufolge des Wegfalls bewegter Teile einen wesentlich vereinfachten Systemaufbau zu, insbesondere wird die Struktur des Rechners wesentlich vereinfacht gegenüber derjenigen des Ausführungsbeispiels gemäss Fig. 6.

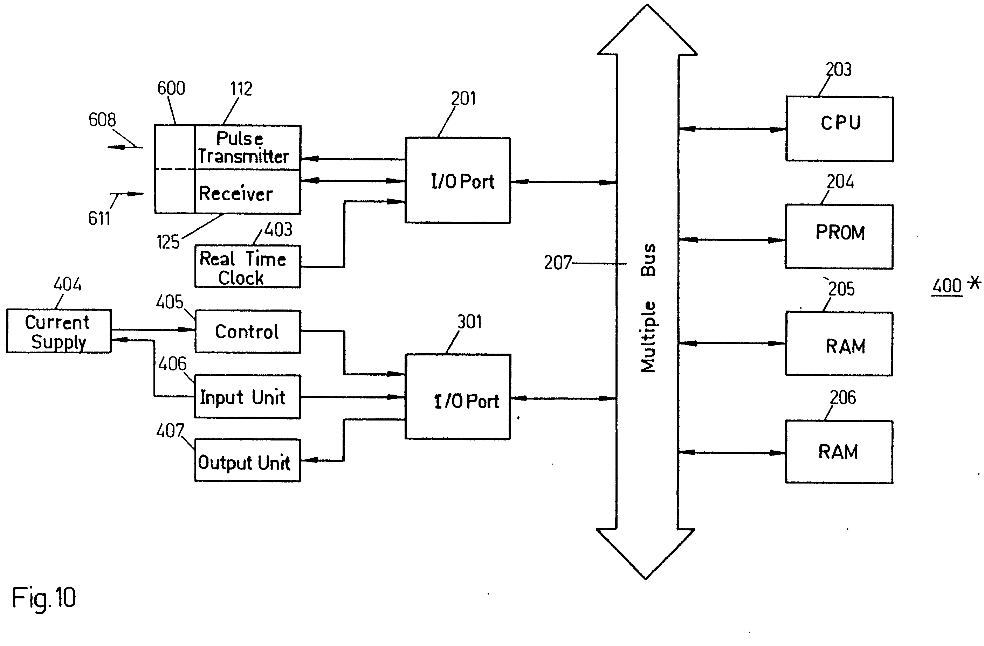

Die Fig. 10 zeigt ein Blockschaltbild des beschriebenen Ausführungsbeispiels mit einem Strahlaufteilungssystem 600. Der Impulssender 112 sendet über das nur summarisch dargestellte Strahlaufteilungssystem einerseits 600 Sendestrahlen 608 aus. Empfangsstrahlen 611 werden vom Strahlaufteilungssystem 600 anderseits dem Empfänger 125 zugeführt. In analoger Weise zu Fig. 6 ist ein Rechner 400* zur Steuerung des Impulssenders 112 und zur Auswertung der Ausgangssignale des Empfängers 125 vorgesehen.

Aus den Laufzeiten der Sendeimpulse vom Ausgang des Senders 112 bis zum Empfang der den Empfangsstrahlen zugehörigen Signale lassen sich wieder Entfernungsvektoren bilden, wobei zu beachten ist, dass sowohl die Laufzeiten im Strahlaufteilungssystem 600 als auch die Laufzeiten im freien Raum der überwachten Flächen in die Entfernungsvektoren E dieses Ausführungsbeispiels eingehen, beziehungsweise rechnerisch verarbeitet werden.

Die einzelnen Blöcke der Fig. 10 entsprechen sinngemäss den mit gleichen Bezugszeichen bezeichneten Blöcken der Fig. 6.

Beim vorliegenden weiteren Ausführungsbeispiel bilden die bestrahlten beziehungsweise reflektierenden Teile der Türumrahmung, beziehungsweise Fensterumrahmung, im Sinne des Patentanspruches 1 je eine virtuelle Linie oder Fläche, durch welche die durch die Strahlrichtungen des Strahlaufteilers 607 definierte Fläche (Türöffnung) strahlungsmässig begrenzt wird. Die Überwachung beschränkt sich daher auf den innerhalb dieser Umrahmungen liegender Flächenabschnitt als eigentliche Schutzfläche beziehungsweise als Schutzraum.

Rechnet man, wie erwähnt, die Laufzeiten und damit die Empfangsvektoren beispielsweise ab Senderausgang, so erkennt man aus Fig. 9, dass jeder überwachten Fläche, d.h. 601 und 602 und allenfalls weiteren ein ganz bestimmter Bereich zugeordnet werden kann, welcher sich jeweils aus der Summe der Laufzeit vom Sender 112 bis zum Strahlaufteiler 607 plus Laufzeit der Sendestrahlen ergibt. Der kürzeste Sendestrahl bei der Öffnung 601 ergibt sich, wenn ein störendes Objekt sich unmittelbar beim Strahlaufteiler 607 befindet, die zugehörige Laufzeit ist dann die kürzeste im Zusammenhang mit der Öffnung 601 feststellbare Wert und dadurch ergibt sich hier der kürzeste Entfernungsvektor. Die längste Laufzeit und daher den grössten Entfernungsvektor ergibt bei der Öffnung 601 ein diagonal verlaufender Sendestrahl 608 beziehungsweise Empfangsstrahl 611.

Durch die periodische Vermessung jeder Öffnung 601, 602 und allenfalls weiterer, ist es daher möglich, laufend definierte Empfangsvektoren zu bilden und zu speichern. Bei Eindringen eines Objektes in irgend eine der so überwachten Flächen (Öffnungen) verändert sich mindestens ein Enfernungsvektor gegenüber dem für die betreffende Fläche (Öffnung) und Richtung oder Richtungen zuvor gebildeten und temporär gespeicherten Entfernungsvektor. Eine solche Veränderung lässt sich aufgrund der Zugehörigkeit zu dem der betreffenden Fläche (Öffnung) zugeordneten Bereich von Entfernungsvektoren (Laufzeiten) demnach auch einer bestimmten Fläche (Öffnung) zuordnen.

Daraus ergibt sich nicht nur die Möglichkeit der Alarmierung eines Eindringens bezüglich Zeitpunkt, sondern gleichzeitig der Anzeige bezüglich des Ortes (Fläche, Öffnung 601, 602 usw.) des Eindringens.

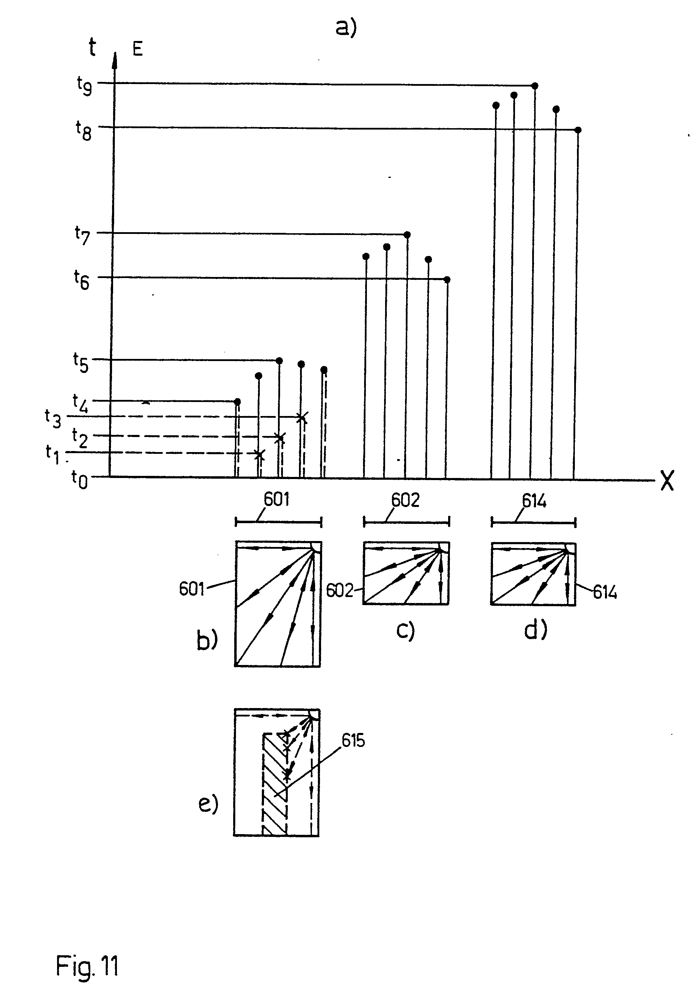

Die Fig. 11 zeigt schematisch die serielle Auswertung der mit einer Anordnung gemäss Fig. 9 und 10 gewonnenen Entfernungsvektoren E. Die Entfernungsvektoren E entsprechen wie erwähnt den zugehörigen Laufzeiten, weshalb im Bild a der Fig. 11 auf der Ordinate sowohl die Zeit t als auch die Entfernung E aufgetragen sind.

Die Abszissenachse X gibt den Überwachunsort an und ist dabei so gelegt, dass sie einem Zeitpunkt $t_0$ entspricht, beispielsweise dem Zeitpunkt des Austretens der Sendestrahlen aus dem, dem Sender 112 am nächsten gelegenen Strahlaufteiler 607.

Bild 11a sind drei Gruppen von je fünf Entfernungsvektoren gezeichnet, wobei die erste Gruppe einer Öffnung 601, die zweite einer Öffnung 602 und die dritte einer weiteren Öffnung 614 zugeordnet sei.

Die mit einem Punkt begrenzten ausgezogenen Entfernungsvektoren gelten für den Normalzustand, das heisst kein eindringendes Objekt in der Öffnung.

Die mit einem Kreuz begrenzten, gestrichelt gezeichneten Entfernungsvektoren gelten für den Fall eines eindringenden Objektes 615.

Diese Verhältnisse sind in den Bildern 11b, 11c, 11d und 11e dargestellt.

Man erkennt aus Fig. 11 unschwer, dass der Laufzeitbereich $t_4$ bis $t_5$ im ungestörten Fall der Öffnung 601, der Laufzeitbereich $t_6$ bis $t_7$ im ungestörten Fall der Öffnung 602 und der Laufzeitbereich $t_8$ bis $t_9$ der Öffnung 614 zuzuordnen ist.

Tritt ein eindringendes Objekt 615, beispielsweise bei Öffnung 601 auf, so erfolgt eine frühzeitigere Reflexion am Objekt 615 statt an der Umrahmung der Öffnung 601 auf, was zu verkürzten Laufzeiten $t_1$, $t_2$ und $t_3$ sowie zu verkürzten Entfernungsvektoren, letztere in Fig. 11a mit einem Kreuz beendet und gestrichelt gezeichnet, führt.

Durch Vergleich der verkürzten mit den der gleichen Öffnung 601 zugeordneten normalen Entfernungsvektoren (ausgezogene Linien) ergibt sich der Zeitpunkt und der Ort, beziehungsweise die Öffnung 601, bei welcher die Eindringung erfolgt.

Dies sind rechnerische Vorgänge, welche durch entsprechende Programmierung des Rechners 400* (Fig. 10) automatisch ablaufen. Es werden dabei alle einzelnen Entfernungsvektoren seriell verarbeitet.

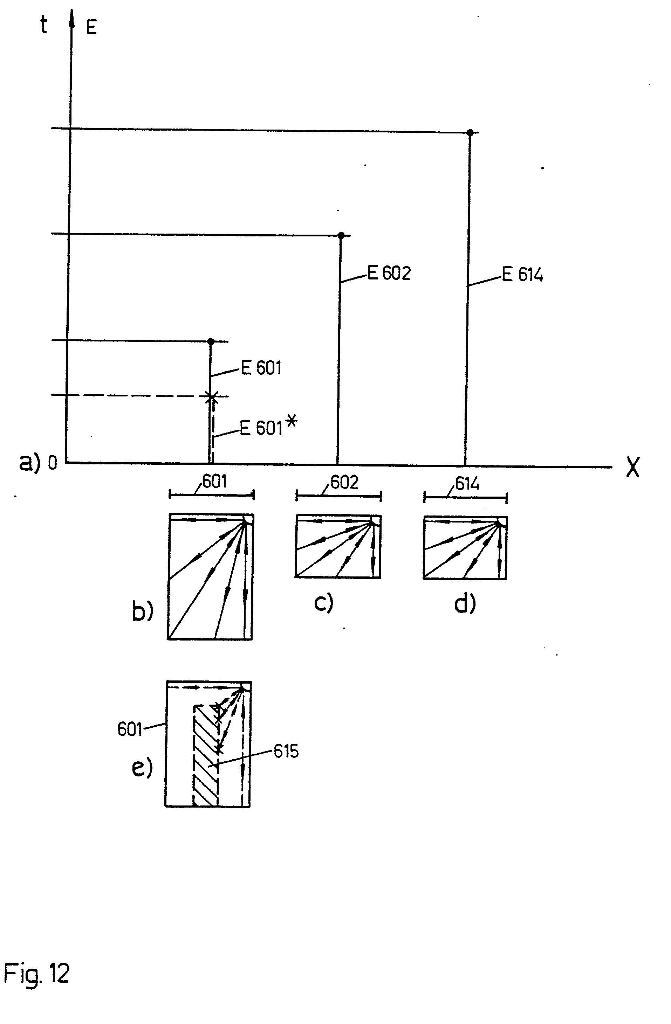

In vereinfachter Weise, lässt sich das Eindringen eines Objektes auch bei gruppenweiser Verarbeitung der Entfernungsvektoren feststellen. Dies wird anhand der Fig. 12 erläutert. Verwendet man einen elektrooptischen Entfernungsmesser bekannter Art (siehe beispielsweise deutsche Offenlegungsschrift 2 634 627) als Empfänger 125 so wird bei geeigneter Dimensionierung ein Eingangsschwingkreis jeweils vor einer ganzen einer Öffnung 601, 602 oder 614 zugeordneten Gruppe von Empfangssignalen gemeinsam angestossen, so dass sich eine gruppenmässige Auswertung der Entfernungsvektoren ergibt. Es ergibt sich dadurch nur ein Empfangsvektor pro Gruppe beziehungsweise Öffnung. Unter Bezugnahme auf die Verhältnisse gemäss Fig. 11 erkennt man für den ungestörten Fall je einen gemeinsamen Entfernungsvektor E 601, beziehungsweise E 602, beziehungsweise E 614 dargestellt in Fig. 12 durch ausgezogene mit einem Punkt endende Linien.

Tritt ein Objekt 615 in die Öffnung 601 so verkürzt sich der ihr zugehörige Entfernungsvektor, siehe Fig. 12a gestrichelte Linie mit Kreuz endend E 601*. Das Auftreten dieses verkürzten Entfernungsvektors ist ein Zeichen für das Eindringen des Objektes 615 in die Öffnung 601.

## Patentansprüche

1. Verfahren zur Raumüberwachung mittels gepulster Richtstrahlung, bei welchem durch eine Folge von Impulsen gebildete Messstrahlen in bestimmter zeitlicher Reihenfolge in definierte Richtungen ausgesandt werden, wobei der Querschnitt der Messstrahlen am Ort eines zu erfassenden Objekts im Verhältnis zu dessen Abmessungen klein ist und daher annähernd punktförmige Ausdehnung besitzt, und bei welchem durch Ermittlung der Laufzeit der reflektierten Messstrahlen Richtungs- und Entfernungsinformationen gewonnen und dadurch direkt oder indirekt mindestens ein Parameter zur Identifizierung eines Objekts ermittelt wird, dadurch gekennzeichnet, dass

a) in dem zu überwachenden Raum bestimmte Punkte (6–16, 23–28) durch Speicherung ihrer Koordinaten festgelegt werden und dadurch mindestens eine virtuelle Linie (4, 17, 18) oder virtuelle Fläche (29, 36) definiert wird, durch welche eine Fläche (1) in Teilflächen (19, 20, 21) oder ein Raum (22) in Teilräume (37, 38, 39) aufgespalten wird;

b) diesen Teilflächen oder Teilräumen je eine bestimmte Bedeutung für die Raumüberwachung zugeordnet wird;

c) die Richtungs- und Entfernungsinformationen mit gespeicherten Koordinaten und Informationen rechnerisch in Beziehung gebracht werden; und

d) die Koordinaten der virtuellen Linie oder virtuellen Fläche gegenüber einem Bezugspunkt (2) zeitlich verändert werden.

2. Verfahren nach Anspruch 1, dadurch gekennzeichnet, dass ein fester absoluter Bezugspunkt (2) gewählt wird.

3. Verfahren nach Anspruch 1, dadurch gekennzeichnet, dass ein beweglicher relativer Bezugspunkt (2) gewählt wird.

4. Verfahren nach Anspruch 1, dadurch gekennzeichnet, dass die Koordinaten von Punkten auf der virtuellen Linie (4, 17, 18) oder virtuellen Fläche (29, 36), deren Werte nicht gespeichert sind, anhand eines funktionellen Zusammenhangs mit benachbarten Punkten, deren Koordinatenwerte gespeichert sind, insbesondere durch Interpolation, ermittelt werden.

5. Verfahren nach Anspruch 1, dadurch gekennzeichnet, dass durch Auswertung der über Messstrahlen erhaltenen Entfernungsinformationen des angemessenen Objekts, oder bei Ausbleiben derselben bei mindestens einem Messstrahl, durch Auswertung der gewonnenen und der gespeicherten Entfernungsinformationen, Bewegungskriterien des Objekts ermittelt werden.

6. Verfahren nach Anspruch 1, dadurch gekennzeichnet, dass durch Auswertung der über Messstrahlen erhaltenen Entfernungsinformationen des angemessenen Objekts, oder bei Ausbleiben derselben bei mindestens einem Messstrahl, durch Auswertung der gewonnenen und der gespeicherten Entfernungsinformationen, Kriterien für die Grösse und/oder Gestalt des Objekts ermittelt werden.

7. Verfahren nach Anspruch 5 oder 6, dadurch gekennzeichnet, dass die Entfernungsinformationen durch Entfernungsvektoren gebildet sind.

8. Verfahren nach einem der Ansprüche 1 bis 7, dadurch gekennzeichnet, dass die Intensität reflektierter Messstrahlen als ein Kriterium für die Erkennung bestimmter Objekte verwendet wird.

9. Verfahren nach einem der Ansprüche 5 bis 8, dadurch gekennzeichnet, dass durch kombinierte Auswertung mindestens eines Teils der durch die in Anspruch 6, 7 oder 8 genannten Auswertungen gewonnenen Kriterien weitere Kriterien für die Erkennung bestimmter Objekte gewonnen werden.

10. Verfahren nach Anspruch 9, dadurch gekennzeichnet, dass durch Vergleich der genannten weiteren Kriterien mit gespeicherten Informationen zusätzliche Kriterien für die Erkennung bestimmter Objekte gewonnen werden.

11. Verfahren nach Anspruch 10, dadurch gekennzeichnet, dass die genannten gespeicherten Informationen das Bewegungsverhalten und/oder die Grösse und/oder die Gestalt und/oder Art bestimmter Objekte charakterisieren.

12. Verfahren nach einem der vorangehenden Ansprüche, dadurch gekennzeichnet, dass durch die Zuordnung der bestimmten Bedeutung für die Raumüberwachung zu den einzelnen Teilflächen (19, 20, 21) oder Teilräumen (37, 38, 39) der zu überwachende Bereich in verschiedene Warn- und/oder Schutzbereiche unterteilt wird.

13. Verfahren nach einem oder mehreren der Ansprüche 7 bis 12, dadurch gekennzeichnet, dass der Vergleich und die Verarbeitung der aus den Entfernungsvektoren abgeleiteten Grössen mit Sollwerten aus einer Speichereinheit mittels eines Rechners unter Berücksichtigung der zeitlichen Reihenfolge der Messwerte geschieht zur Feststellung und Identifizierung des in einen Warn- und/oder Schutzbereich eingedrungenen Objektes und/oder zur Auslösung eines Voralarms oder Hauptalarms.

14. Verfahren nach Anspruch 13, dadurch gekennzeichnet, dass bei festgestelltem Eindringen mindestens eines definierten Objektes selbständig Abwehrmassnahmen ausgelöst werden.

15. Verfahren nach Anspruch 14, dadurch gekennzeichnet, dass die Abwehrmassnahmen hinsichtlich des Ortes und/oder der Bewegung des oder der eingedrungenen Objekte gezielt ausgelöst werden.

16. Verfahren nach einem der Ansprüche 1 bis 15, dadurch gekennzeichnet, dass die Richtstrahlung nach unterschiedlichen Richtungen durch bewegliche Anordnung eines Senders selbst und/oder bewegliche Strahlablenkungselemente, welche dem Sender zugeordnet sind, erfolgt.

17. Verfahren nach einem der Ansprüche 1 bis 15, dadurch gekennzeichnet, dass die Richtstrahlung nach unterschiedlichen Richtungen durch eine Mehrzahl nach unterschiedlichen Richtungen strahlender Sender, oder Senderelemente erfolgt.

18. Verfahren nach einem der Ansprüche 1 bis 15, dadurch gekennzeichnet, dass die Richtstrahlung nach unterschiedlichen Richtungen durch mindestens einen Sender dem mindestens ein Strahlaufteilungssystem zur flächenmässigen und/oder raummässigen Auffächerung der Strahlung nachgeordnet ist, erfolgt.

19. Verfahren nach einem der Ansprüche 1 bis 17, dadurch gekennzeichnet, dass Strahlungsimpulse nach einem bestimmten Programm einzeln nach unterschiedlichen Richtungen ausgesandt und jeweils aus der betreffenden Strahlungsrichtung reflektierte Signale räumlich selektiv nacheinander empfangen und einzeln ausgewertet werden, wobei der Sendekanal und der Empfangskanal gegeneinander entkoppelt sind.

20. Verfahren nach Anspruch 18, dadurch gekennzeichnet, dass Strahlungsimpulse nach einem bestimmten Programm gruppenweise gleichzeitig nach unterschiedlichen Richtungen ausgesandt und Reflexionen jeweils aus den genannten Richtungen gruppenweise empfangen und gruppenweise ausgewertet werden.

21. Verfahren nach den Ansprüchen 18 und 20, dadurch gekennzeichnet, dass eine Veränderung des Empfangssignals aufgrund des Eindringens eines Objektes in den Strahlauffächerungsbereich als ein Kriterium für eine Alarmauslösung verwendet wird.

22. Verfahren nach den Ansprüchen 18 und 20, dadurch gekennzeichnet, dass durch Anwendung mindestens zweier Strahlaufteilungssysteme mit flächenmässiger Auffächerung der Strahlung in unterschiedlichen Flächen und durch Auswertung des zeitlichen Unterschiedes der Veränderung des Ausgangssignals in den mindestens zwei Systemen die Bewegungsrichtung eines eindringenden Objektes ermittelt und als weiteres Kriterium zur richtungsabhängigen Alarmauslösung verwendet wird.

23. Verfahren nach einem der vorangehenden Ansprüche, dadurch gekennzeichnet, dass elektromagnetische Energie als Impulse abgestrahlt wird.

24. Verfahren nach Anspruch 23, dadurch gekennzeichnet, dass impulsförmige Laserstrahlung verwendet wird.

25. Verfahren nach Anspruch 24, dadurch gekennzeichnet, dass im Bereich unsichtbaren Lichtes Impulse abgestrahlt werden.

26. Verfahren nach Anspruch 1, dadurch gekennzeichnet, dass die Bündelung der Strahlung in Abhängigkeit von ihrer Richtung gesteuert wird.

27. Verfahren nach Anspruch 1, dadurch gekennzeichnet, dass die Sendeleistung und/oder Empfangsempfindlichkeit in Abhängigkeit von der Strahlungsrichtung gesteuert wird.

28. Verfahren nach Anspruch 1 oder 7, dadurch gekennzeichnet, dass die Sendeleistung und/oder die Empfangsempfindlichkeit in Abhängigkeit von der Grösse von Messstrahlen, beziehungsweise Entfernungsvektoren, und/oder der Intensität der Reflexion gesteuert wird.

29. Verfahren nach Anspruch 1, dadurch gekennzeichnet, dass bestimmte Objekte aufgrund ihres gegenüber anderen Objekten und/oder dem Hintergrund höhere Reflexionsvermögens erkannt werden und in der Folge ihr Standort und/oder ihr Bewegungsverhalten gespeichert und/oder ausgewertet wird.

30. Verfahren nach Anspruch 29, dadurch gekennzeichnet, dass Objekte mit höherem Reflexionsvermögen durch gezielte Reduktion der Sendeleistung und/oder der Empfangsempfindlichkeit aus der Gesamtheit aller Objekte oder des Hintergrundes getrennt erfasst werden.

31. Verfahren nach einem oder mehreren der vorangehenden Ansprüche, dadurch gekennzeichnet, dass zur Festlegung ausgewählter Punkte von virtuellen Linien oder virtuellen Flächen und zur Speicherung der zugehörigen Koordinaten dieser ausgewählten Punkte in einem, dem Rechner zugeordneten Speicher, die von den ausgewählten Punkten reflektierte Strahlungsenergie vorübergehend während einer bestimmten Zeitspanne durch während dieser Zeitspanne dort aufgebrachte, in Richtung zum Empfänger hochwirksame Reflektoren erhöht wird, wobei die zu den ausgewählten Punkten gehörenden Entfernungsvektoren aufgrund der damit verbundenen höheren Intensität erkannt und vorübergehend nur diese Empfangsvektoren ausgewertet werden und die so ermittelten Koordinaten dieser ausgewählten Punkte gespeichert werden.

32. Verfahren nach einem oder mehreren der vorangehenden Ansprüche, dadurch gekennzeichnet, dass mindestens eine virtuelle Linie oder Fläche einer Fahrbahn zugeordnet wird und die Überquerung der virtuellen Linie oder Durchdringung der virtuellen Fläche durch mindestens ein Fahrzeug erfasst und ausgewertet und/oder registriert wird.

33. Verfahren nach Anspruch 1, dadurch gekennzeichnet, dass eine Fläche oder ein Raum auf gleichbleibenden und/oder veränderten Zustand überwacht und/oder bei verändertem Zustand festgestellte Veränderungen bewertet und/oder angezeigt werden.

34. Verfahren nach Anspruch 33, dadurch gekennzeichnet, dass mindestens eine virtuelle Linie oder virtuelle Fläche auf der Oberfläche eines zu überwachenden Objektes liegend, festgelegt wird.

35. Vorrichtung zur Durchführung des Verfahrens nach Anspruch 1, mit einem einen Impulssender enthaltenden Richtstrahler für die Abgabe gepulster Richtstrahlen in definierter zeitlicher Folge und nach definierten Richtungen, mit einem Empfänger für den räumlich gerichteten Empfang reflektierter Energie der vom Richtstrahler ausgesandten Richtstrahlung, und mit einem Rechner als Auswerteeinrichtung zur rechnerischen Auswertung einer Mehrzahl von aus unterschiedlichen Richtungen empfangenen und/oder ausgebliebenen Reflexionssignalen, dadurch gekennzeichnet, dass der Rechner (400) zur zeitlichen Änderung von in ihm gespeicherten Koordinatenwerten virtueller Linien oder Flächen programmiert ist.

36. Vorrichtung nach Anspruch 35, dadurch gekennzeichnet, dass der Richtstrahler (100) einen festen Standort (2) aufweist.

37. Vorrichtung nach Anspruch 35, dadurch gekennzeichnet, dass der Richtstrahler (100) einen variablen Standort aufweist.

38. Vorrichtung nach Anspruch 35, 36 oder 37, dadurch gekennzeichnet, dass die Auswerteeinrichtung Speicher für die Aufnahme von Informationen für die Erkennung bestimmter Objekte aufweist.

39. Vorrichtung nach einem der Ansprüche 35 bis 38, dadurch gekennzeichnet, dass der Auswerteeinrichtung eine Ausgabeeinheit (407) zugeordnet ist für die Anzeige eines Voralarms und/oder Hauptalarms.

40. Vorrichtung nach Anspruch 35, dadurch gekennzeichnet, dass im Richtstrahler (100) ein den Impulssender (112) und den Empfänger (125) und ein Strahlablenkungsorgan (116) enthaltender Oberteil (103) gegenüber einem am Standort (2) befestigten Unterteil (101) um eine Achse (104) drehbar gelagert ist.

41. Vorrichtung nach Anspruch 40, dadurch gekennzeichnet, dass dem Impulssender (112) und/oder dem Strahlablenkorgan (116) eine Regel- und Steuereinheit (130) zugeordnet ist, welche in Verbindung mit einem Drehgeber (107) steht und welche den Zeitpunkt für die Abgabe von Strahlungsimpulsen des Impulssenders (112) unter Berücksichtigung von Korrektur von Winkelfehlern der Drehbewegung des Oberteils (103) und/oder von Winkelfehlern des Strahlablenkorgans (116) steuert.

42. Vorrichtung nach Anspruch 40, dadurch gekennzeichnet, dass dem Impulssender (112) ein Parabolspiegel (114) oder eine steuerbare Variooptik (132) nachgeordnet ist, um die Strahlung des Impulssenders (112) einem steuerbaren Strahlablenkorgan (116) zuzuführen.

43. Vorrichtung nach Anspruch 42, dadurch gekennzeichnet, dass das Strahlablenkorgan (116) ein beidseitig verspiegelter Schwingspiegel ist, welcher von einer durch eine Regel- und Steuereinheit (130) kontrollierten Schwenkeinrichtung (119) um exakt definierte Winkelbeträge schwenkbar ist, wobei die eine Seite des Schwingspiegels mit der Sendestrahlung und die andere mit der empfangenen reflektierten Strahlung beschickt ist.

44. Vorrichtung nach Anspruch 43, dadurch gekennzeichnet, dass der Schwingspiegel eine im wesentlichen elliptische Form aufweist.

45. Vorrichtung nach Anspruch 42, 43 oder 44, dadurch gekennzeichnet, dass dem Strahlablenkorgan ein erster Umlenkspiegel (120) nachgeordnet ist, welcher die Sendestrahlung in Abhängigkeit von der jeweiligen Stellung des Strahlablenkorgans (116) mit wechselndem Elevationswinkel (ψ) nach aussen richtet und dass dem Strahlablenkorgan (116) ein zweiter Umlenkspiegel (121) vorgeordnet ist, welcher empfangene, reflektierte Sendestrahlung von aussen über das Strahlablenkorgan (116) und einen weiteren Parabolspiegel (122) aus der, der Richtung des den Richtstrahler (100) verlassenden Sendestrahlenbündels entgegengesetzter Richtung dem Empfänger (125) zuführt.

46. Vorrichtung nach Anspruch 45, dadurch gekennzeichnet, dass dem Empfänger (125) ein auf die Wellenlänge der Sendestrahlung abgestimmtes schmalbandiges Interferenzfilter (124) vorgeschaltet ist.

47. Vorrichtung nach einem der Ansprüche 35 bis 46, dadurch gekennzeichnet, dass der Richtstrahler (100) einen auf dem Laufzeitprinzip arbeitenden Distanzmesser aufweist.

48. Vorrichtung nach einem der Ansprüche 35 bis 47, dadurch gekennzeichnet, dass der Richtstrahler (100) dazu bestimmt und ausgebildet ist, mit seinen Messstrahlen mindestens einer virtuellen Linie zu folgen und/oder mindestens eine virtuelle Fläche abzutasten und reflektierte Strahlungsenergie (40*) zu empfangen und auszuwerten.

49. Vorrichtung nach Anspruch 39 und einem der Ansprüche 41 bis 48, dadurch gekennzeichnet, dass der Rechner (400) einen Zentralrechner (200) mit einer ersten Eingabe/Ausgabe-Einheit (201) und einer zweiten Eingabe/Ausgabe-Einheit (202), einer Zentral-Einheit (203), einem Programmspeicher (204), einem ersten Schreib-Lese-Speicher (205), einem zweiten Schreib-Lese-Speicher (206) und einer ersten Vielfach-Sammelschiene (207) sowie einen Satellitenrechner (300) mit einer Eingabe/Ausgabe-Einheit (301), einer Zentraleinheit (302), einem Programmspeicher (303), einem Schreib-Lese-Speicher (304), und einer zweiten Vielfach-Sammelschiene (305) und eine den beiden Vielfach-Sammelschienen (207, 305) zugeordnete Sammelschienen-Steuereinheit (401) sowie einen diesen Vielfach-Sammelschienen (207, 305) zugeordneten Sende/Empfänger (402) aufweist, wobei der Rechner (400) sowohl mit dem Drehgeber (107), der Regel- und Steuereinheit (130), dem Strahlablenkorgan (116), einer Echtzeituhr (403), einer Kontrolleinheit (405), einer Eingabeeinheit (406) und der Ausgabe-Einheit (407) in Verbindung steht und eine Antriebseinheit (105) sowie Stromversorgungsteile (404) an die Eingabeeinheit (406) angeschlossen sind und zwischen den Stromversorgungsteilen (404) und der Kontroll-Einheit (405) eine Verbindung besteht.

50. Vorrichtung nach Anspruch 35, dadurch gekennzeichnet, dass dem Impulssender (112) und dem Empfänger (125) ein Strahlaufteilungssystem (600) zur flächenmässigen oder raummässigen Strahlaufteilung oder Strahlauffächerung zugeordnet zur Aufteilung der Sendeenergie nach unterschiedlichen Richtungen und zum gerichteten Empfang reflektierter Energie aus diesen Richtungen.

51. Vorrichtung nach Anspruch 50, dadurch gekennzeichnet, dass das Strahlaufteilungssystem (600) ein Senderkopplungsorgan (604) zur Ankopplung an den Impulssender (112), ein Sendeleitsystem (605) zur Weiterleitung der Sendeenergie zu einem Strahlaufteiler (607) sowie einen Strahlsammler (610) und ein Empfangsleitsystem (612) zur Weiterleitung der Empfangsenergie über ein Empfängerkopplungsorgan (613) zum Empfänger (125) enthält, welchem ein Rechner (400*) zur Auswertung der Empfangssignale zugeordnet ist.

52. Vorrichtung nach Anspruch 51, gekennzeichnet durch einen Laserimpulssender (112) mit einer Linsenanordnung (604) als Senderkopplungsorgan zur Ankopplung des Laserimpulssenders (112) an ein als Glasfaserbündel (605) ausgebildetes Sendeleitsystem zur Weiterleitung der auf die einzelnen Fasern aufgeteilten Sendeenergie zu dem an das Glasfaserbündel angeschlossenen und aus Sendelinsen (606) mit unterschiedlich gerichteten Achsen, bestehenden Strahlaufteiler (607), sowie durch den Strahlsammler (610) bildende Empfangslinsen (609) mit unterschiedlich gerichteten Achsen, durch diesen Empfangslinsen zugeordnete Fasern eines weiteren Glasfaserbündels (612) als Empfangsleitsystem und durch eine als Empfängerkopplungsorgan ausgebildete weitere Linsenanordnung (613).

## Claims

1. A method of monitoring a region by means of pulsed directional radiation, at which measuring beams being formed by a series of pulses are transmitted in a defined chronological sequence in defined directions whereby at the position of an object to be detected the cross sectional area of the measuring beams is small in relation to the dimensions of the object and has therefore an approximate punctiformexpanse, and whereby by determining the transmit time of the reflected measuring beams direction informations and distance informations are obtained and thereby at least one parameter for the identification of an object is determined directly or indirectly, characterised by

a) fixing in the region to be monitored certain points (6–16, 23–28) by storing their coordinates and thereby defining at least one virtual line (14, 17, 18) or virtual surface (29, 36) by means of which a surface (1) is divided into partial surfaces (19, 20, 21) or a space (22) into partial spaces (37, 38, 39) respectively,

b) assigning a respective predetermined significance to each of these partial surfaces or partial spaces,

c) relating the direction informations and distance informations to stored coordinates and informations analytically, and

d) altering as a function of time the coordinates of the virtual line or virtual surface in relation to a reference point (2).

2. A method according to claim 1, characterised in that there is selected a fixed absolute reference point (2).

3. A method according to claim 1, characterised in that there is selected a movable relative reference point.

4. A method according to claim 1, characterised in that the coordinates of points on the virtual line (4, 17, 18) or virtual surface (29, 36) the values of which points are not stored are determined by a functional correlation with adjacent points having stored coordinate values, particularly by interpolation.

5. A method according to claim 1, characterised in that by deriving distance informations of the measured object obtained via the measuring beams, or upon determining the absence of the distance informations at least at one measuring beam, by deriving the obtained and the stored distance informations, movement criteria of the said object are determined.

6. A method according to claim 1, characterised in that by deriving distance informations of the measured object obtained via the measuring beams, or upon determining the absence of the distance informations at least at one measuring beam, by deriving the obtained and the stored distance informations, criteria for the size and/or configuration of the said object are determined.

7. A method according to claim 5 or 6, characterised in that the distance informations are distance vectors.

8. A method according to any one of the claims 1 to 7, characterised in that the intensity of reflected measuring beams is used as a criterium for the recognition of certain objects.

9. A method according to any one of the claims 5 to 8, characterised in that further criteria for the recognition of certain objects are obtained as a result of the combined evaluation of at least one part of the criteria obtained by the evaluations mentioned in claims 6, 7 or 8.

10. A method according to claim 9, characterised in that additional criteria are obtained for the recognition of certain objects by comparing the mentioned further criteria with stored information.

11. A method according to claim 10, characterised in that the mentioned stored information characterised the movement behaviour and/or the size and/or the configuration and/or type of certain objects.

12. A method according to any preceding claim, characterised in that by the assigning of the respective predetermined significance to the particular partial surfaces (19, 20, 21) or partial spaces (37, 38, 39) the region to be monitored is divided into different warning and/or protection regions.

13. A method according to one or more of the claims 7 to 12, characterised in that the comparison and processing of the magnitudes derived from the distance vectors are effected using set values from a memory unit by means of a computer under consideration of the timewise sequence of the measured values in order to determine and identify the object which has penetrated into a warning and/or protection region and/or to release a preliminary alarm or a main alarm.

14. A method according to claim 13, characterised in that upon determining the penetration of at least one defined object, defensive measures are triggered automatically.

15. A method according to claim 14, characterised in that the defensive measures are triggered selectively in respect of the location and/or movement of the object or objects which have penetrated into the monitored region.

16. A method according to any one of the claims 1 to 15, characterised in that the directional radiation is effected in different directions by means of a movable arrangement of a transmitter itself and/or by movable beam deflection elements which are assigned to the transmitter.

17. A method according to any one of the claims 1 to 15, characterised in that the directional radiation is effected in different directions by means of a plurality of transmitters or transmitter elements which transmit the measuring beams in different directions.

18. A method according to any one of the claims 1 to 15, characterised in that the directional radiation is effected in different directions by at least one transmitter and at least one beam splitter system for splitting the radiation planelike and/or spacelike, the beam splitter system being positioned following the said transmitter.

19. A method according to any one of the claims 1 to 17, characterised in that radiation pulses are transmitted individually in different directions in accordance with a determined programme, and signals which are reflected respectively from the relevant direction of radiation are received successively, spatially and selectively and are evaluated individually, whereby the transmitter channel and the receiver channel are mutually decoupled with respect to one another.

20. A method according to claim 18, characterised in that radiation pulses are transmitted in groups simultaneously in different directions and in accordance with a determined programme and reflected energy is respectively received in groups from the mentioned directions and also evaluated in groups.

21. A method according to the claims 18 and 20, characterised in that a change of the received signal as a result of an object penetrating into the beam splitting region, is used as a criterium for triggering an alarm.

22. A method according to the claims 18 and 20, characterised in that by using at least two beam splitting systems splitting the radiation planelike into different surfaces and by evaluating the timewise difference of the change of the output signal in said at least two systems, the direction of movement of an object penetrating into the region to be monitored is determined and is used as another criterium for the directional-dependent triggering of an alarm.

23. A method according to any one of the preceding claims, characterised in that electromagnetic energy is transmitted as pulsed radiation.

24. A method according to claim 23, characterised in that pulse-like laser radiation is used.

25. A method according to claim 24, characterised in that pulses are transmitted in the range of invisible light.

26. A method according to claim 1, characterised in that the focusing of the radiation is controlled as a function of the direction of radiation.

27. A method according to claim 1, characterised in that the transmitting power and/or the receiving sensitivity is controlled as a function of the direction of radiation.

28. A method according to claim 1 or 7, characterised in that the transmitting power and/or the receiving sensitivity is controlled as a function of the magnitude of measuring beams, or respectively distance vectors, and/or the intensity of reflection.

29. A method according to claim 1, characterised in that certain objects are recognised because of their greater reflection capability in respect of other objects and/or the background, and consequently their erection site and/or movement behaviour is stored and/or evaluated.

30. A method according to claim 29, characterised in that objects having greater reflection capability are detected separately from the totality of all objects or the background by intentionally reducing the transmitting power and/or the receiving sensitivity.

31. A method according to any one or more of the preceding claims, characterised in that for fixing selected points from virtual lines or virtual surfaces and for storing the coordinates belonging to these selected points in a memory assigned to the computer, the radiation energy reflected from the selected points is increased temporarily during a certain period of time by reflectors positioned there during this period of time and being highly effective in the direction of the receiver, whereby the distance vectors belonging to the selected points are recognised as a result of the higher intensity connected thereto and only these receiving vectors are temporarily evaluated and the coordinates, obtained in this way, of these selected points are stored.

32. A method according to any one or more of the preceding claims, characterised in that at least one virtual line or surface is assigned to a travel path and the action of crossing the virtual line or penetrating the virtual surface by at least one vehicle is detected and evaluated and/or registered.

33. A method according to claim 1, characterised in that a surface or a space is monitored with respect to a constant and/or altered condition and/or that changes which had been determined at a changed condition are valued and/or indicated.

34. A method according to claim 33, characterised in that at least one virtual line or virtual surface is fixed resting on the surface of an object which is to be monitored.

35. An apparatus for accomplishing the method according to claim 1, comprising a directional radiation emitter provided with a pulse transmitter for emitting pulsed directional radiation beams in a defined timewise sequence and in defined directions, a receiver for the spatially directed reception or reflected energy of the directional radiation transmitted by the radiation emitter, and a computer serving as an evaluation device for the analytical evaluation of a multiplicity of reflection signals which have been received from different directions and/or of reflection signals being absent, characterised in that the computer (400) has coordinate values of the virtual lines or virtual surfaces stored therein and is programmed for the timewise change of the said coordinate values.

36. An apparatus according to claim 35, characterised in that the directional radiation emitter (100) has a fixed erection site (2).

37. An apparatus according to claim 35, characterised in that the directional radiation emitter (100) has a movable erection site.

38. An apparatus according to claim 35, 36, or 37, characterised in that the evaluation device comprises storage means for receiving information for the recognition of certain objects.

39. An apparatus according to any one of the claims 35 to 38, characterised in that an output means (407) is assigned to the evaluation device, used to indicate a preliminary alarm and/or a main alarm.

40. An apparatus according to claim 35, characterised in that the directional beam emitter (100) comprises an upper portion (103) containing the pulse transmitter (112) and the receiver (125) and a beam deflection element (116), said upper portion being rotatably mounted about an axis (104) in relation ro a lower portion (101) secured at the erection site (2).

41. An apparatus according to claim 40, characterised in that a regulation and control device (130) is assigned to the pulse transmitter (112) and/or the beam deflection element (116), which regulation and control device is connected to a rotational transmitter (107) and controls the point of time of emission of radiation pulses of the pulse transmitter (112), while taking into account and correcting angular errors of the rotational movement of the upper portion (103) and/or angular errors of the beam deflection element (116).

42. An apparatus according to claim 40, characterised in that a parabolic mirror (114) or a controllable zoom lens (132) is positioned following the pulse transmitter (112) in order to supply the radiation of the pulse transmitter (112) to a controllable beam deflection element (116).

43. An apparatus according to claim 42, characterised in that the beam deflection element (116) is an oscillating mirror which is reflectively coated on both sides and is pivotable through exactly defined angular values by a pivot device (119) controlled by a regulation and control unit (130), whereby one face of the oscillating mirror is impinged with the transmitted radiation and the other face with the received reflected radiation.

44. An apparatus according to claim 43, characterised in that the oscillating mirror has a substantially elliptical configuration.

45. An apparatus according to claim 42, 43, or 44, characterised in that a first deflection mirror (120) is positioned following the beam deflection element which first deflection mirror outwardly directs the transmitted radiation as a function of the momentary position of the beam deflection element (116) through a varying elevation angle ($\psi$), and that a second deflection mirror (121) is positioned before the beam deflection element, which second deflection mirror delivers received and reflected transmitted radiation from the outside by means of the beam deflection element (116) and another parabolic mirror (122) to the receiver (125) from a direction opposite the direction of the transmitted radiation beam departing from the directional radiation emitter (100).

46. An apparatus to claim 45, characterised in that a narrow-band interference filter (124) which is tuned to the wave-length of the transmitted radiation is arranged before the receiver (125).

47. An apparatus according to any of the claims 35 to 46, characterised in that the directional radiation emitter (100) comprises a distance measuring device operating according to the principle of transit times of the transmitted energy.

48. An apparatus according to any of the claims 35 to 47, characterised in that the directional radiation emitter (100) is structured and intended for the purpose of following at least one virtual line and/or scanning at least one virtual surface by means of its measuring beams and receiving and evaluating reflected radiation energy (40*).

49. An apparatus according to claim 39 and any one of the claims 41 to 48, characterised in that the computer (400) comprises a central computer (200) containing a first input/output-device (201) and a second input/output-device (202), a central processor unit (203), a programme memory (204), a first read-write-storage (205), a second read-write-storage (206) and a first multiple bus (207); a satellite computer (300) containing an input/output-device (301), a central processor unit (302), a programme memory (303), a read-write-storage (304) and a second multiple bus (305); a bus-control unit (401) operatively associated with both multiple buses (207, 305); and a transmitter-receiver (402) operatively associated with said multiple buses (207, 305); whereby the computer (400) is connected to the rotational transmitter (107), the regulation and control unit (130), the beam deflection element (116), a real time clock (403), a control unit (405), an input unit (406) and the output means (407), and whereby a drive unit (105) and current supply means (404) are connected to the input unit (406) and there is a connection between the current supply means (404) and the control unit (405).

50. An apparatus according to claim 35, characterised in that a beam splitter system (600) is operatively associated with the pulse transmitter (112) and the receiver (125) for splitting or fanning the beams planelike or spacelike, for distributing the transmission energy in different directions and for the directed reception of reflected energy from such directions.

51. An apparatus according to claim 50, characterised in that the beam splitter system (600) comprises a transmitter coupling element (604) for coupling said beam splitter system with the pulse transmitter (112), a transmission conducting system (605) for passing on the transmitted energy to a beam splitter (607), and also a beam collector (610) and a receiving conducting system (612) for passing on the received energy by means of a receiver coupling element (613) to the receiver (125), with which there is operatively associated a computer (400*) for evaluating the received signals.

52. An apparatus according to claim 51, characterised by a laser pulse transmitter (112) having a lens arrangement (604) as the transmitter coupling element for coupling the laser pulse transmitter (112) to the transmission conducting system which is structured as a glass fibre bundle (605) for passing on the transmitted energy which is distributed at the individual fibres to the beam splitter (607) connected to the glass fibre bundle and consisting of transmitting lenses (606) having differently directed axes, and by receiving lenses (609) constituting the beam collector (610) and having differently directed axes, by fibres of another glass fibre bundle (612) operatively associated with said receiving lenses and serving as the receiving conducting system, and by another lens arrangement (613) constructed as the receiver coupling element.

**Revendications**

1. Procédé de surveillance d'un espace à l'aide d'un émetteur directif à ondes pulsées, qui consiste à émettre une succession de rayons de mesure qui sont formés par une succession d'impulsions selon une cadence déterminée dans le temps et dans des directions déterminées, et qui présentent, à la hauteur de l'objet à identifier, une section transversale faible par rapport aux dimensions des objets à identifier, c'est-à-dire une section transversale réduite à la valeur d'un point, et dont la détermination du temps de propagation de ces rayons de mesure réfléchis fournit des informations sur la direction et sur la distance, en permettant d'obtenir ainsi, soit directement, soit indirectement, un paramètre au moins, conduisant à l'identification d'un objet, caractérisé en ce que:
   a) un certain nomre de points précis (6–16, 23–28) sont déterminés, dans l'espace à surveiller, par la mémorisation de leurs coordonnées, en vue de créer une ligne virtuelle au moins (4, 17, 18) ou une surface virtuelle au moins (29, 36), laquelle subdivise soit une surface donnée (1) en surfaces partielles (19, 20, 21), soit un espace donné (22) en compartiments (37, 38, 39);
   b) on attribue à chacune de ces surfaces partielles ou chacun de ces compartiments un rôle déterminé, dans le cadre de la surveillance de l'espace;
   c) les informations relatives aux distances, tout comme les informations relatives aux directions, sont rapportées mathématiquement aux coordonnées et aux informations mémorisées;
   d) les coordonnées des lignes ou des surfaces virtuelles sont modifiées dans le temps par rapport à un point de référence (2).

2. Procédé selon la revendication 1, caractérisé en ce que l'on choisit un point de repère absolu fixe (2).

3. Procédé selon la revendication 1, caractérisé en ce qu'on choisit un point de repère relatif mobile (2).

4. Procédé selon la revendication 1, caractérisé en ce que les coordonnées des points qui sont situés sur la ligne virtuelle (4, 17, 18) ou dans la surface virtuelle (29, 36), et dont les valeurs ne sont pas mémorisées, sont déterminées sur la base d'une relation fonctionnelle, et notamment par interpolation par rapport à des points voisins dont les coordonnées ont été mémorisées.

5. Procédé selon la revendication 1, caractérisé en ce que l'exploitation des informations de distance concernant l'objet détecté, fournies par les rayons de mesure, ou alors l'exploitation de l'absence de ces informations sur l'un au moins de ces rayons de mesure, permet de déterminer, sur la base des données de distances relevées précédemment et mémorisées, les critères de déplacement de cet objet.

6. Procédé selon la revendication 1, caractérisé en ce que l'exploitation des informations de distance concernant l'objet détecté, fournies par les rayons de mesure, ou alors l'exploitation de l'absence de ces informations sur l'un au moins de ces rayons de mesure, permet de déterminer, sur la base des données de mesure relevées précédemment et mémorisées, les critères concernant la taille et/ou la forme de cet objet.

7. Procédé selon l'une des revendications 5 et 6, caractérisé en ce que les informations de distance sont constituées par des vecteurs de distance.

8. Procédé selon l'une quelconque des revendications 1 à 7, caractérisé en ce que l'intensité des rayons de mesure réfléchis constitue un critère de reconnaissance de certains objets.

9. Procédé selon l'une quelconque des revendications 5 à 8, caractérisé en ce que l'exploitation combinée d'une partie au moins des critères obtenus par les procédés d'exploitation cités dans les revendications 6, 7 ou 8 permet d'obtenir de nouveaux critères, contribuant à l'identification de certains objets.

10. Procédé selon la revendication 9, caractérisé en ce que la comparaison de nouveaux critères cités avec des informations mémorisées permet d'obtenir de nouveaux critères, contribuant à l'identification de certains objets.

11. Procédé selon la revendication 10, caractérisé en ce que les informations mémorisées citées caractérisent la mobilité, et/ou la taille, et/ou l'aspect, et/ou la nature de certains objets.

12. Procédé selon l'une quelconque des revendications précédentes, caractérisé en ce que, dans le cadre de la surveillance de l'espace, l'attribution d'un rôle déterminée aux différents compartiments (37, 38, 39) ou aux différentes surfaces partielles (19, 20, 21) permet de subdiviser l'espace à surveiller en différentes zones d'alerte et/ou en différentes zones protégées.

13. Procédé selon une ou plusieurs des revendications 7 à 12, caractérisé en ce que la comparaison et le traitement des valeurs dérivées des vecteurs de distance sont effectués par un ordinateur sur la base de valeurs théoriques stockées dans une unité de mémoire, et en tenant compte de l'ordre chronologique des valeurs de mesure, en vue de détecter ainsi et d'identifier l'objet ayant pénétré dans la zone d'alerte et/ou dans la zone protégée, et/ou en vue de déclencher la préalerte ou l'alerte principale.

14. Procédé selon la revendication 13, caractérisé en ce que la pénétration constatée d'un objet identifié au moins déclenche automatiquement les mesures de défense.

15. Procédé selon la revendication 14, caractérisé en ce que les mesures de défense sont déclenchées compte tenu de l'endroit et/ou du déplacement de l'objet identifié.

16. Procédé selon l'une des revendications 1 à 15, caractérisé en ce que l'émission des ondes directives pulsées s'effectue dans différentes directions à l'aide d'un émetteur rotatif, et/ou à l'aide d'éléments déviateurs pivotants coordonnés à cet émetteur.

17. Procédé selon l'une des revendications 1 à 15, caractérisé en ce que les ondes directives sont dirigées dans différentes directions par plusieurs émetteurs ou éléments d'émetteurs qui émettent dans ces différentes directions.

18. Procédé selon l'une des revendications 1 à 15, caractérisé en ce que les ondes directives sont émises dans différentes directions par un émetteur au moins assisté d'un dispositif de répartition qui assure la dispersion des ondes dans la surface et/ou dans l'espace protégés.

19. Procédé selon l'une des revendications 1 à 17, caractérisé en ce que les ondes pulsées sont émises, selon un programme déterminé, une à une et dans différentes directions et en ce que les signaux réfléchis de la direction donnée sont reçus d'une manière sélective et l'un après l'autre pour être analysés isolément, à l'effet de quoi le canal émetteur et le canal récepteur sont découplés l'un par rapport à l'autre.

20. Procédé selon la revendication 18, caractérisé en ce que les ondes pulsées sont émises, selon un programme déterminé, par groupes diffusés dans différentes directions et en ce que ces ondes, réfléchies des directions données, sont reçues et exploitées groupes par groupes.

21. Procédé selon les revendications 18 et 20, caractérisé en ce que la modification du signal reçu, provoquée par la pénétration d'un objet dans la zone de dispersion des ondes est utilisée comme critère de déclenchement de l'alerte.

22. Procédé selon les revendications 18 et 20, caractérisé en ce que la mise en place de deux dispositifs de répartition assurant la dispersion des ondes dans différentes surfaces ainsi que l'exploitation des différences de temps dans la modification du signal de sortie dans les deux dispositifs, permettent de déterminer la direction du déplacement de l'intrus, qui est utilisée comme autre critère de déclenchement de l'alerte, en fonction de cette direction.

23. Procédé selon l'une des revendications précédentes, caractérisé en ce qu'une énergie électro-magnétique est diffusée sous forme pulsée.

24. Procédé selon la revendication 23, caractérisé en ce que l'on utilise des rayons laser sous forme pulsée.

25. Procédé selon la revendication 24, caractérisé en ce que l'on diffuse des impulsions dans le domaine de la lumière invisible.

26. Procédé selon la revendication 1, caractérisé en ce que la focalisation des ondes est réglée en fonction de leur direction.

27. Procédé selon la revendication 1, caractérisé en ce que la puissance de l'émission et/ou la sensibilité de la réception sont réglées en fonction de la direction des ondes émises.

28. Procédé selon l'une des revendications 1 ou 7, caractérisé en ce que la puissance de l'émission et/ou la sensibilité de la réception sont réglées en fonction de l'amplitude des rayons de mesure, voire des vecteurs de distance et/ou de l'intensité de la réflexion.

29. Procédé selon la revendication 1, caractérisé en ce que certains objets déterminés sont identifiés plus facilement compte tenu de leur meilleur pouvoir réfléchissant par rapport à d'autres objets et/ou par rapport à l'arrière-plan, ce qui permet de mémoriser et/ou d'exploiter par la suite leur lieu d'implantation et/ou leur déplacement.

30. Procédé selon la revendication 29, caractérisé en ce que la réduction appropriée de la puissance émettrice et/ou de la sensibilité de la réception permettent d'identifier, parmi tous les autres, les objets connus pour le meilleur pouvoir réfléchissant par rapport à d'autres objets ou par rapport à l'arrière-plan.

31. Procédé selon une ou plusieurs des revendications précédentes, caractérisé en ce que pour la définition des points de base des lignes virtuelles ou des surfaces virtuelles, ainsi que pour la mémorisation des coordonnées, correspondant à ces points de base, dans une mémoire coordonnée à l'ordinateur, l'on augmente temporairement et pendant une période déterminée l'énergie réfléchie pendant cette période par les points de base, à l'aide de réflecteurs à grande puissance implantés sur le terrain, ce qui fait que les vecteurs de distance correspondant à ces mêmes points de base, sont identifiés, compte tenu de l'intensité plus forte et analysés alors que les coordonnées des points de base ainsi définies sont mémorisées.

32. Procédé selon une ou plusieurs des revendications précédentes, caractérisé en ce qu'une ligne virtuelle ou une surface virtuelle au moins est coordonnée à une voie de circulation et en ce que le franchissement de la ligne ou de la surface virtuelle par au moins un véhicule est ainsi reconnu et exploté et/ou enregistré.

33. Procédé selon la revendication 1, caractérisé en ce qu'une surface ou un espace peut être contrôlé, pour ce qui concerne tant la modification que la non-modification de la situation, et en ce que les modifications ainsi constatées sont exploitées et/ou affichées.

34. Procédé selon la revendication 33, caractérisé en ce qu'une ligne virtuelle ou une surface virtuelle au moins, se trouvant à la surface d'un objet, est détectée avec précision.

35. Dispositif en vue de la mise en oeuvre du procédé défini dans la revendication 1, comportant un émetteur équipé d'un émetteur d'impulsions assurant la diffusion d'ondes directives pulsées à la cadence voulue et dans les directions déterminées, un récepteur assurant la réception des ondes directives pulsées et réfléchies, un ordinateur assurant l'exploitation mathématique, tant des nombreux signaux réfléchis parvenant des différentes directions que des signaux de réflexion non parvenus, caractérisé en ce que l'ordinateur est programmé en vue de la modification dans le temps des coordonnées mémorisées se rapportant aux lignes ou aux surfaces virtuelles.

36. Dispositif selon la revendication 35, caractérisé en ce que l'émetteur directif (100) comporte un lieu d'implantation fixe (2).

37. Dispositif selon la revendication 35, caractérisé en ce que l'émetteur directif (100) comporte un lieu d'implantation variable.

38. Dispositif selon l'une des revendications 35, 36 ou 37, caractérisé en ce que l'unité de dépouillement des données comporte une mémoire sur laquelle sont dirigées les informations utilisées pour l'identification de certains objets.

39. Dispositif selon l'une des revendications 35 à 38, caractérisé en ce que l'unité de dépouillement des données est coordonnée à une unité de sortie (407) affichant la pré-alerte et/ou l'alerte principale.

40. Dispositif selon la revendication 35, caractérisé en ce que l'émetteur directif (100) comporte une partie supérieure (103) qui loge l'émetteur d'impulsions (112), le récepteur (125) et l'élément déviateur des ondes (116) et qui pivote autour d'un axe (104) sur une partie inférieure (101) immobile, fixée au point d'implantation (2).

41. Dispositif selon la revendication 40, caractérisé en ce que l'émetteur d'impulsions (112) et/ou l'élément déviateur des ondes (116) est coordonné à une unité de réglage et de commande (130) qui est reliée à un compte-tours (107) et qui déclenche, au moment voulu, l'émission des ondes pulsées par l'émetteur d'impulsions (112) en corrigeant, le cas échéant, les erreurs angulaires résultant du mouvement de rotation de la partie supérieure (103) et/ou les erreurs angulaires résultant de l'élément déviateur (116).

42. Dispositif selon la revendication 40, caractérisé en ce qu'un miroir parabolique (114) et une lentille à foyer réglable (132), intercalés en aval de l'émetteur d'impulsions (112), dirigent les rayons pulsés émis par ce dernier sur un élément déviateur réglable (116).

43. Dispositif selon la revendication 42, caractérisé en ce que l'élément déviateur des ondes (116) est un miroir oscillant à deux faces qui, sous l'effet d'un dispositif oscillant (119), contrôlé par l'élément de réglage et de commande (130), effectue des oscillations d'une ampleur strictement contrôlée, à la suite de quoi l'une des faces du miroir oscillant reçoit les rayons réfléchis en retour.

44. Dispositif selon la revendication 43, caractérisé en ce que le miroir oscillant présente une forme essentiellement elliptique.

45. Dispositif selon l'une des revendications 42, 43 ou 44, caractérisé en ce qu'un premier miroir déviateur (120), intercalé en aval de l'élément déviateur (116) dirige, sous un angle de hausse (ψ) de valeur variable, les rayons émis vers l'extérieur compte tenu de la position de l'élément déviateur (116) et en ce qu'un deuxième miroir déviateur (121), intercalé en amont de l'élément déviateur (116), dirige, par l'intermédiaire de cet élément déviateur (116) et d'un deuxième miroir parabolique (122), les rayons réfléchis sur l'émetteur (125), et ce, dans le sens contraire au faisceau en provenance de l'émetteur directif (100).

46. Dispositif selon la revendication 45, caractérisé en ce qu'un filtre d'interférences à bande étroite (14) adapté à la longueur d'ondes de l'émetteur, est intercalé en amont du récepteur (125).

47. Dispositif selon l'une des revendications 35 à 46, caractérisé en ce que l'émetteur directif (100) comporte un télémètre fonctionnant d'après le principe du temps de propagation.

48. Dispositif selon l'une des revendications 35 à 47, caractérisé en ce que l'émetteur directif (100) est conçu et destiné à suivre, avec ses rayons de mesure, une ligne virtuelle au moins et/ou à balayer une surface virtuelle, ainsi qu'à capter et à analyser l'énergie réfléchie (40*).

49. Dispositif selon la revendication 39 et l'une des revendications 41 à 48, caractérisé en ce que l'ordinateur (400) comprend un ordinateur central (200) ayant une première unité entrée/sortie (201), une deuxième unité/sortie (202), une unité centrale (203), une mémoire programme (204), une première mémoire écriture/lecture (205), une deuxième mémoire écriture/lecture (206), une première barre omnibus à plusieurs voies (20*), ainsi qu'un calculateur satellite (300) avec une unité entrée/sortie (301), une unité centrale (302), une mémoire programme (303), une mémoire écriture/lecture (304), une deuxième barre omnibus à plusieurs voies (305) et une unité de commande (401) contrôlant les deux barres omnibus (207, 305) ainsi qu'un émetteur/récepteur (402) coordonné à ces mesures barres omnibus (207, 305), de manière que l'ordinateur (400) soit relié au compte-tours (107), à l'unité de réglage et de commande (103), à l'élément déviateur (116), à une horloge à temps réel (403), à une unité de contrôle (405), à une unité d'entrée (406), et à l'unité de sortie (407), alors que l'unité d'entraînement (105) et les moyens d'alimentation en courant (404) sont reliés à l'unité d'entrée (406) tandis que les moyens d'alimentation en courant (404) et l'unité de contrôle (405) sont reliés entre eux.

50. Dispositif selon la revendication 35, caractérisé en ce qu'un dispositif de répartition des rayons (600), coordonné à l'émetteur d'impulsions (112), ainsi qu'au récepteur (125) et chargé de la distribution ou de la dispersion des rayons en surface ou dans l'espace, assure d'une part, la répartition dans différentes directions de l'énergie émise et, d'autre part, la réception de l'énergie réfléchie de ces mêmes directions.

51. Dispositif selon la revendication 50, caractérisé en ce que le dispositif de répartition des rayons (600) comprend un organe de couplage de l'émetteur (604) assurant son couplage avec l'émetteur d'impulsions (112), un dispositif transmetteur (605) en vue de la retransmission de l'énergie émise sur un répartiteur de rayons (607) et, également un concentrateur de rayons (610) et un dispositif récepteur (612) assurant la retransmission de l'énergie de réception, par l'intermédiaire d'un organe de couplage du récepteur (613), vers le récepteur (125) relié à un ordinateur (400*) qui assure l'exploitation des signaux reçus.

52. Dispositif selon la revendication 51, caractérisé, d'une part, par un émetteur à impulsions laser (112) doté d'un organe de couplage réalisé sous la forme d'un système de lentilles (604), assurant le couplage de l'émetteur à impulsions laser (112) avec un système transmetteur constitué d'un faisceau en fibres de verre (605) qui assure la transmission de l'énergie émise, répartie entre les différentes fibres, sur un répartiteur de rayons (607) qui est relié à ce faisceau en fibres de verre et qui comporte des lentilles émettrices (606), dont les axes sont dirigés dans des directions différentes et, d'autre part, par un concentrateur de rayons (610) qui comporte des lentilles de réception (609), dont les axes sont dirigés dans des directions différentes et par des fibres coordonnées à ces lentilles de réception, et appartenant à un autre faisceau de fibres de verre constituant le système de réception et par un autre système de lentilles (613), servant de système de couplage de récepteur.

Fig.1

Fig.2

Fig. 3

Fig. 4

0 029 827

Fig. 5

Fig. 6

Fig.7

Fig. 8

39

0 029 827

Fig. 9

Fig. 9a

Fig.10

a)

Fig. 11

Fig. 12